(19) Europäisches Patentamt
European Patent Office
Office européen des brevets

(11) EP 4 410 846 A1

(12) EUROPEAN PATENT APPLICATION
published in accordance with Art. 153(4) EPC

(43) Date of publication:
**07.08.2024 Bulletin 2024/32**

(21) Application number: **22876380.1**

(22) Date of filing: **28.09.2022**

(51) International Patent Classification (IPC):
***C08F 10/02*** *(2006.01)* ***D01F 6/04*** *(2006.01)*

(52) Cooperative Patent Classification (CPC):
**C08F 10/02; D01F 6/04;** Y02E 60/10

(86) International application number:
**PCT/JP2022/036272**

(87) International publication number:
**WO 2023/054514 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2021 JP 2021159241**

(71) Applicant: **Asahi Kasei Kabushiki Kaisha**
**Tokyo 1000006 (JP)**

(72) Inventors:
- **TSUJIMOTO, Koichi**
  **Tokyo 100-0006 (JP)**
- **SHIKATA, Kazuya**
  **Tokyo 100-0006 (JP)**

(74) Representative: **D Young & Co LLP**
**3 Noble Street**
**London EC2V 7BQ (GB)**

# (54) ULTRAHIGH-MOLECULAR-WEIGHT POLYETHYLENE POWDER AND SHAPED OBJECT OBTAINED BY SHAPING SAME

(57) Provided is an ultrahigh-molecular-weight polyethylene powder having intrinsic viscosity IV of 1.0 dL/g or more and 33.0 dL/g or less, wherein average value $T_S$ of swelling onset temperatures determined by specific methods is 90°C or higher and 130°C or lower.

EP 4 410 846 A1

## Description

Technical Field

The present invention relates to an ultrahigh-molecular-weight polyethylene powder and a shaped article prepared by shaping the same.

Background Art

Polyethylene is employed in a wide variety of uses such as films, sheets, microporous membranes, fibers, foams, and pipes. Polyethylene is used because melt processing is easy and the obtained shaped article has high mechanical strength and is also excellent in chemical resistance, rigidity, etc. Among others, ultrahigh-molecular-weight polyethylene has higher mechanical strength because of its large molecular weight and is excellent in slidability and abrasion resistance and also excellent in chemical stability and long-term reliability.

However, the ultrahigh-molecular-weight polyethylene has low fluidity even if melted at a temperature equal to or higher than a melting point. Therefore, for example, a compression shaping method of compression-shaping a polyethylene powder under heating, followed by cutting, or a shaping method of dissolving a polyethylene powder in a solvent such as liquid paraffin, then performing drawing, and removing the solvent for shaping into a sheet or a thread form, is applied thereto.

The ultrahigh-molecular-weight polyethylene is shaped in a powder state. The powder has a larger surface area than that of a pellet and has fine pores in the powder.

As for the pore state of the polyethylene powder, for example, Patent Document 1 discloses a polyethylene powder that is rapidly dissolved in a solvent and produces a shaped article with less occurrence of undissolved matter, by adjusting a specific surface area determined by a BET method and a pore volume determined by a mercury intrusion method to proper ranges.

For example, Patent Document 2 discloses a polyethylene powder that produces a shaped article with less occurrence of undissolved matter, by adjusting the ratio between the median diameter and the modal diameter of pores measured by a mercury intrusion method to a proper range.

In recent years, a polyethylene powder has been proposed which is excellent in shaping processability and produces a high-quality shaped article.

For example, Patent Document 3 discloses a polyethylene powder that has excellent solubility and is capable of improving productivity and product quality in processing shaping (particularly, wet extrusion shaping), by imparting a predetermined particle size distribution and a predetermined swelling ratio to the polyethylene powder.

For example, Patent Document 4 discloses a polyethylene polymer powder improved in oxidation resistance while effectively improved in membrane uniformity and smoothness of a thin film, by controlling intrinsic viscosity IV and Al, Mg and Si contents in specific ranges.

For example, Patent Document 5 discloses an ethylene polymer that is less entangled when processed and drawn, is excellent in low-temperature tensile strength in the form of a high-strength fiber, and is excellent in rate of shrinkage of a membrane and low-temperature puncture strength in the form of a microporous membrane, by allowing the ethylene polymer to contain nonmagnetic matter that satisfies specific conditions.

List of Prior Art Documents

Patent Document

Patent Document 1: Japanese Patent Laid-Open No. 2017-088773
Patent Document 2: Japanese Patent Laid-Open No. 2017-145306
Patent Document 3: Japanese Patent Laid-Open No. 2019-019265
Patent Document 4: Japanese Patent Laid-Open No. 2019-070117
Patent Document 5: Japanese Patent Laid-Open No. 2019-123777

Summary of Invention

Problems to be Solved by Invention

As mentioned above, the ultrahigh-molecular-weight polyethylene powder has a larger surface area than that

of a pellet and has fine pores in the powder. Hence, the shape, surface state, crystal state, pore state, and the like of the powder are changed during heating. Therefore, the shaping of the ultrahigh-molecular-weight polyethylene powder requires adjustment to a proper temperature and processing such as dissolution or compression. In the case of compression-shaping the ultrahigh-molecular-weight polyethylene powder, air bubbles tend to remain in the resulting shaped article or strain tends to remain in the resulting shaped article and to cause deformation after cooling, unless a preheating temperature before compression is proper.

The polyethylene powder described in Patent Document 1 merely undergoes the adjustment of a specific surface area and a pore volume as powder properties. The properties of the powder are largely changed at an actual dissolution or melting temperature, and this powder is still susceptible to improvement in shaping processability.

The polyethylene powder described in Patent Document 2 also merely undergoes the definition of a powder pore size. Since the pore size is largely changed during the course of heating, the powder is still susceptible to improvement in shaping processability and may have the difficulty in producing a homogeneous shaped article.

The polyethylene powders described in Patent Documents 3 to 5 are excellent in shaping processability and however, have not discussed about shaping processability when swollen beforehand at a low temperature. Thus, the powders are still susceptible to improvement.

The present invention has been made in light of the circumstances described above, and an object of the present invention is to provide an ultrahigh-molecular-weight polyethylene powder that is excellent in shaping processability when swollen beforehand at a low temperature, and to provide a high-quality shaped article (e.g., separator for secondary battery and fiber) prepared by shaping the same.

Means for Solving Problems

The present inventor has pursued diligent studies to attain the object and consequently completed the present invention by finding that the object can be attained by controlling swelling onset temperatures of ultrahigh-molecular-weight polyethylene powders having particle sizes of $D_{10}$, $D_{50}$, and $D_{90}$ to specific ranges.

Specifically, the present invention is as follows:

[1] An ultrahigh-molecular-weight polyethylene powder

having intrinsic viscosity IV of 1.0 dL/g or more and 33.0 dL/g or less, wherein
average value $T_S$ of swelling onset temperatures determined by the following methods 1 and 2 is 90°C or higher and 130°C or lower:

[Method 1; method for measuring $D_{10}$, $D_{50}$, and $D_{90}$]
Particle sizes of the target ultrahigh-molecular-weight polyethylene powder are measured using a laser particle size distribution analyzer with methanol as a dispersion medium, and a cumulative particle size distribution from smaller particle sizes is prepared on the basis of the measurement. Particle sizes that attain cumulative percentages of 10%, 50%, and 90% are defined as $D_{10}$, $D_{50}$, and $D_{90}$, respectively.
[Method 2; method for measuring swelling onset temperatures $T_{10}$, $T_{50}$, and $T_{90}$ and method for calculating average value $T_S$ thereof]
Swelling onset temperature $T_{10}$ of a powder having a particle size of $D_{10}$ is determined. First, any one particle of an ultrahigh-molecular-weight polyethylene powder having a major axis size and a minor axis size (as for a plane figure of a particle observed under an optical microscope, a distance between parallel lines having the shortest interval is defined as the minor axis size of the particle, and a distance between parallel lines having the longest interval in a direction perpendicular thereto is defined as the major axis size of the particle) within a range of $D_{10} \pm 10\%$ is collected while confirming with an optical microscope. The collected one particle of the ultrahigh-molecular-weight polyethylene powder (hereinafter, also referred to as a "measurement particle") is loaded onto a glass slide, and 0.05 mL of liquid paraffin is dropped to the measurement particle using a 1 mL syringe. Then, a glass cover is placed thereon so as to sandwich the measurement particle. Then, the glass slide is loaded onto a heat stage and heated from room temperature to 150°C under heating conditions given below. The appearance of the measurement particle during heating is photographed every 6 seconds under an optical microscope equipped with a camera. An equivalent circle diameter of the measurement particle is calculated from each of the obtained observation images. The lowest temperature at which the equivalent circle diameter of the measurement particle is increased by 1% or more with respect to the equivalent circle diameter of the measurement particle at 80°C in a temperature range of 80°C or higher and 150°C or lower is defined as the swelling onset temperature of the measurement particle. Measurement is performed for n = 10, and an average value thereof is defined as the swelling onset temperature $T_{10}$.

Next, swelling onset temperature $T_{50}$ of an ultrahigh-molecular-weight polyethylene powder having a particle size of $D_{50}$, and swelling onset temperature $T_{90}$ of an ultrahigh-molecular-weight polyethylene powder having a particle size of $D_{90}$ are also determined in the same manner as in the swelling onset temperature $T_{10}$ using respectively an ultrahigh-molecular-weight polyethylene powder having a major axis size and a minor axis size within a range of $D_{50} \pm 10\%$, and an ultrahigh-molecular-weight polyethylene powder having a major axis size and a minor axis size within a range of $D_{90} \pm 10\%$.

Finally, average value $T_S$ of the swelling onset temperatures $T_{10}$, $T_{50}$, and $T_{90}$ is determined as follows:

$$T_S = \frac{T_{10}+T_{50}+T_{90}}{3}$$

(Heating conditions)

Heating rate from room temperature to 35°C: 5°C/min
Heating rate in a range from 35°C to 80°C: 8°C/min
Heating rate in a range from 80°C to 150°C: 5°C/min.

[2] The ultrahigh-molecular-weight polyethylene powder according to [1], wherein standard deviation s of the swelling onset temperatures of the powders having particle sizes of $D_{10}$, $D_{50}$, and $D_{90}$ is 5°C or less.
[3] The ultrahigh-molecular-weight polyethylene powder according to [2], wherein the standard deviation s of the swelling onset temperatures of the powders having particle sizes of $D_{10}$, $D_{50}$, and $D_{90}$ is 2.4°C or less.
[4] The ultrahigh-molecular-weight polyethylene powder according to any of [1] to [3], wherein a comonomer content measured by $^{13}$C-NMR is 1.0 mol% or less.
[5] The ultrahigh-molecular-weight polyethylene powder according to any of [1] to [4], having a titanium (Ti) content of 5.0 ppm or less, an aluminum (Al) content of 5.0 ppm or less, and a silicon (Si) content of 100 ppm or less.
[6] The ultrahigh-molecular-weight polyethylene powder according to any of [1] to [5], wherein $D_{90}/D_{10}$ is 1.2 or more and 4.0 or less.
[7] The ultrahigh-molecular-weight polyethylene powder according to any of [1] to [6], wherein $D_{10}$ is 30 μm or larger, and $D_{90}$ is 425 μm or smaller.
[8] A shaped article obtained by shaping the ultrahigh-molecular-weight polyethylene powder according to any of [1] to [7] .
[9] The shaped article according to [8], wherein the shaped article is a separator for secondary battery.
[10] The shaped article according to [8], wherein the shaped article is a fiber.
[11] A method for producing the ultrahigh-molecular-weight polyethylene powder according to any of [1] to [7], comprising the steps of:

in producing an ethylene polymer, mixing 0.01 to 0.05 mol% of a comonomer in terms of a gas phase concentration into ethylene, and performing polymerization; and
drying a polymer powder at 100°C or higher.

[12] A method for producing the ultrahigh-molecular-weight polyethylene powder according to any of [1] to [7], comprising
a polymerization step of performing polymerization in a state of a polymerization solvent supplemented with 30 to 50% by mass of a plasticizer.
[13] The method for producing an ultrahigh-molecular-weight polyethylene powder according to [12], further comprising:

a removal step of removing the plasticizer from the powder after completion of the polymerization step; and
a drying step of setting catalytic activity during polymerization to 5000 (g-PE/g-catalyst) or less, and drying the polymer powder at 70°C or lower.

[14] The method for producing an ultrahigh-molecular-weight polyethylene powder according to [12] or [13], wherein

the plasticizer is liquid paraffin.

Advantages of Invention

According to the present invention, an ultrahigh-molecular-weight polyethylene powder that is excellent in shaping processability when swollen beforehand at a low temperature, and a high-quality shaped article (e.g., separator for secondary battery and fiber) prepared by shaping the same can be obtained.

Mode for Carrying Out Invention

Hereinafter, a mode for carrying out the present invention (hereinafter, simply referred to as the "present embodiment") will be described in detail. However, the present invention is not intended to be limited by the present embodiment. Various changes or modifications can be made in the present invention within the spirit thereof.

[Ultrahigh-molecular-weight polyethylene powder]

The ultrahigh-molecular-weight polyethylene powder (hereinafter, also simply referred to as the "powder") of the present embodiment has intrinsic viscosity IV of 1.0 dL/g or more and 33.0 dL/g or less, preferably 1.5 dL/g or more and 31.0 dL/g or less, more preferably 2.4 dL/g or more and 29.0 dL/g or less.

The ultrahigh-molecular-weight polyethylene powder of the present embodiment has better strength when having the intrinsic viscosity IV equal to or more than the lower limit, and has better shaping processability when having the intrinsic viscosity IV equal to or less than the upper limit.

The intrinsic viscosity IV of the ultrahigh-molecular-weight polyethylene powder of the present embodiment is preferably 1.0 dL/g or more and 13.0 dL/g or less, more preferably 1.5 dL/g or more and 11.5 dL/g or less, further preferably 2.4 dL/g or more and 9.5 dL/g or less, for example, for use in a shaped article of a separator for secondary battery. A separator for secondary battery obtained by shaping the ultrahigh-molecular-weight polyethylene powder having the intrinsic viscosity IV within the range described above tends to be excellent in membrane strength and thermal shrink properties.

The intrinsic viscosity IV of the ultrahigh-molecular-weight polyethylene powder of the present embodiment is preferably 13.5 dL/g or more and 33.0 dL/g or less, more preferably 15.0 dL/g or more and 31.0 dL/g or less, further preferably 16.5 dL/g or more and 29.0 dL/g or less, for example, for use in a shaped article of a fiber. A fiber obtained by shaping (e.g., general shaping or shaping when the powder is swollen beforehand at a low temperature) the ultrahigh-molecular-weight polyethylene powder having the intrinsic viscosity IV within the range tends to be excellent in thread strength.

The method for controlling the intrinsic viscosity IV to the range mentioned above is not particularly limited and involves, for example, changing the polymerization temperature of a reactor where ethylene is homopolymerized or where ethylene and an olefin copolymerizable therewith are copolymerized. The intrinsic viscosity IV tends to be lower as the polymerization temperature is higher, and tends to be higher as the polymerization temperature is lower. Another method for controlling the intrinsic viscosity IV to the range mentioned above is not particularly limited and involves, for example, changing the type of an organic metal compound for use as a promoter in the homopolymerization of ethylene or the copolymerization of ethylene and an olefin copolymerizable therewith. A further alternative method for controlling the intrinsic viscosity IV to the range mentioned above is not particularly limited and involves, for example, adding a chain transfer agent in the homopolymerization of ethylene or the copolymerization of ethylene and an olefin copolymerizable therewith. The addition of the chain transfer agent tends to decrease the intrinsic viscosity IV of the ultrahigh-molecular-weight polyethylene to be produced even at the same polymerization temperature.

Examples of the chain transfer agent include, but are not limited to, hydrogen and one or more compounds selected from the group consisting of organic aluminum compounds, organic boron compounds, organic zinc compounds, organic silicon compounds, organic cadmium compounds, and organic lead compounds. Hydrogen is particularly preferred.

In the present embodiment, the intrinsic viscosity IV can be determined by a method described in Examples mentioned later.

The ultrahigh-molecular-weight polyethylene powder of the present embodiment is preferably a powder consisting of an ethylene homopolymer and/or a copolymer of ethylene and an olefin (hereinafter, also referred to as a comonomer) copolymerizable therewith (hereinafter, the homopolymer and the copolymer are also collectively referred to as the "ethylene polymer").

Specific examples of the olefin copolymerizable with ethylene include, but are not particularly limited to, at least one comonomer selected from the group consisting of $\alpha$-olefins having 3 or more and 15 or less carbon atoms, cyclic olefins having 3 or more and 15 or less carbon atoms, compounds represented by the formula $CH_2=CHR^1$ (wherein $R^1$

is an aryl group having 6 to 12 carbon atoms), and linear, branched, or cyclic dienes having 3 or more and 15 or less carbon atoms. Among them, an α-olefin having 3 or more and 15 or less carbon atoms is preferred.

Examples of the α-olefin include, but are not particularly limited to, propylene, 1-butene, 4-methyl-1-pentene, 1-hexene, 1-octene, 1-nonene, 1-decene, 1-undecene, 1-dodecene, 1-tridecene, and 1-tetradecene.

The comonomer content measured by $^{13}C$-NMR in the ultrahigh-molecular-weight polyethylene powder of the present embodiment is preferably 1.0 mol% or less, more preferably 0.1 mol% or less, further preferably 0 mol%. The ultrahigh-molecular-weight polyethylene powder of the present embodiment having the comonomer content that falls within the range tends to be able to suppress decomposition and tends to improve the strength of a shaped article obtained by shaping the ultrahigh-molecular-weight polyethylene powder.

[Swelling onset temperatures of ultrahigh-molecular-weight polyethylene powder]

In the ultrahigh-molecular-weight polyethylene powder of the present embodiment, the average value $T_S$ of swelling onset temperatures determined by the following methods 1 and 2 is 90°C or higher and 130°C or lower, preferably 90°C or higher and 125°C or lower, more preferably 90°C or higher and 120°C or lower.

[Method 1; method for measuring $D_{10}$, $D_{50}$, and $D_{90}$]

Particle sizes of the target ultrahigh-molecular-weight polyethylene powder are measured using a laser particle size distribution analyzer with methanol as a dispersion medium, and a cumulative particle size distribution from smaller particle sizes is prepared on the basis of the measurement. Particle sizes that attain cumulative percentages of 10%, 50%, and 90% are defined as $D_{10}$, $D_{50}$, and $D_{90}$, respectively.

[Method 2; method for measuring swelling onset temperatures $T_{10}$, $T_{50}$, and $T_{90}$ and method for calculating average value $T_S$ thereof]

Swelling onset temperature $T_{10}$ of a powder having a particle size of $D_{10}$ is determined. First, any one particle of an ultrahigh-molecular-weight polyethylene powder having a major axis size and a minor axis size (as for a plane figure of a particle observed under an optical microscope, a distance between parallel lines having the shortest interval is defined as the minor axis size of the particle, and a distance between parallel lines having the longest interval in a direction perpendicular thereto is defined as the major axis size of the particle) within a range of $D_{10} \pm 10\%$ is collected while confirming with an optical microscope. The collected one particle of the ultrahigh-molecular-weight polyethylene powder (hereinafter, also referred to as a "measurement particle") is loaded onto a glass slide, and 0.05 mL of liquid paraffin is dropped to the measurement particle using a 1 mL syringe. Then, a glass cover is placed thereon so as to sandwich the measurement particle. Then, the glass slide is loaded onto a heat stage and heated from room temperature to 150°C under heating conditions given below. The appearance of the measurement particle during heating is photographed every 6 seconds under an optical microscope equipped with a camera. An equivalent circle diameter of the measurement particle is calculated from each of the obtained observation images. The lowest temperature at which the equivalent circle diameter of the measurement particle is increased by 1% or more with respect to the equivalent circle diameter of the measurement particle at 80°C in a temperature range of 80°C or higher and 150°C or lower is defined as the swelling onset temperature of the measurement particle. Measurement is performed for n = 10, and an average value thereof is defined as the swelling onset temperature $T_{10}$.

Next, swelling onset temperature $T_{50}$ of an ultrahigh-molecular-weight polyethylene powder having a particle size of $D_{50}$, and swelling onset temperature $T_{90}$ of an ultrahigh-molecular-weight polyethylene powder having a particle size of $D_{90}$ are also determined in the same manner as in the swelling onset temperature $T_{10}$ using respectively an ultrahigh-molecular-weight polyethylene powder having a major axis size and a minor axis size within a range of $D_{50} \pm 10\%$, and an ultrahigh-molecular-weight polyethylene powder having a major axis size and a minor axis size within a range of $D_{90} \pm 10\%$.

Finally, average value $T_S$ of the swelling onset temperatures $T_{10}$, $T_{50}$, and $T_{90}$ is determined as follows:

$$T_S = \frac{T_{10}+T_{50}+T_{90}}{3}$$

(Heating conditions)

Heating rate from room temperature to 35°C: 5°C/min
Heating rate in a range from 35°C to 80°C: 8°C/min
Heating rate in a range from 80°C to 150°C: 5°C/min

In the method for measuring the swelling onset temperatures, the amount of 0.05 mL dropped using a 1 mL syringe can be in the range of 0.05 mL ± 0.01 mL.

When the average value of the swelling onset temperatures of the ultrahigh-molecular-weight polyethylene powder having particle sizes of $D_{10}$, $D_{50}$, and $D_{90}$ falls within the range described above, the ultrahigh-molecular-weight polyethylene powder of the present embodiment enables the temperature of preliminary swelling to be set to a lower temperature than that of conventional polyethylene, for example, when processed by wet extrusion into a fiber (e.g., high-strength fiber) or a separator for secondary battery (e.g., microporous membrane), and as a result, can reduce environmental load by reducing energy required for wet extrusion processing. When the intrinsic viscosity IV falls within the range described above and the average value of the swelling onset temperatures of the ultrahigh-molecular-weight polyethylene powder having particle sizes of $D_{10}$, $D_{50}$, and $D_{90}$ falls within the range described above, the ultrahigh-molecular-weight polyethylene powder of the present embodiment is excellent in shaping processability when swollen beforehand at a low temperature in wet extrusion shaping. Therefore, a high-quality shaped article, for example, a separator for secondary battery with the number of defects reduced and thickness variations suppressed, or a fiber with the number of thread lumps reduced and an uneven thread diameter suppressed, can be obtained.

Examples of the method for controlling the average value of the swelling onset temperatures of the ultrahigh-molecular-weight polyethylene powders having particle sizes of $D_{10}$, $D_{50}$, and $D_{90}$ to the range mentioned above include, but are not particularly limited to, a method of, in producing an ethylene polymer, mixing a very small amount (0.01 to 0.05 mol% in terms of a gas phase concentration) of a comonomer into ethylene, and performing polymerization; and drying a polymer powder at 100°C or higher, and a method of performing polymerization in a state of a polymerization solvent supplemented with 30 to 50% by mass of a plasticizer; removing the plasticizer from the powder after the completion of polymerization step; and setting catalytic activity (weight of polyethylene obtained per catalyst having a unit weight) during polymerization to 5000 (g-PE/g-catalyst) or less, and drying the polymer powder at 70°C or lower.

Examples of the plasticizer include, but are not particularly limited to, nonvolatile solvents capable of forming a homogeneous solution at a temperature equal to or higher than the melting point of polyolefin, for example, hydrocarbons such as liquid paraffin and paraffin wax; esters such as dioctyl phthalate and dibutyl phthalate; and higher alcohols such as oleyl alcohol and stearyl alcohol. Among the plasticizers, liquid paraffin is preferred because the liquid paraffin is highly compatible with polyethylene and/or polypropylene as polyolefin resin, is less likely to cause interfacial delamination between the resin and the plasticizer even when a melt-kneaded product is drawn, and tends to facilitate uniform drawing.

Although the mechanism under which the average value of the swelling onset temperatures of the ultrahigh-molecular-weight polyethylene powders having particle sizes of $D_{10}$, $D_{50}$, and $D_{90}$ can be controlled to the range mentioned above by the methods mentioned above is not clear, the present inventors have made the following presumption.

When a polyethylene powder is impregnated with a plasticizer, the plasticizer penetrates (blends) into the polyethylene powder so that the polyethylene powder is swollen. The plasticizer is considered to penetrate into an amorphous moiety because the plasticizer cannot easily penetrate into a crystalline moiety of the polyethylene powder. In actuality, it has been confirmed that the crystalline long period of the polyethylene powder is extended with swelling. In short, the swelling seems to be a phenomenon in which the plasticizer enters between lamellar crystals of the polyethylene powder and pushes out the amorphous moiety. On the other hand, tie molecules that connect lamellar crystals exist between the lamellar crystals. The tie molecules play a role in anchoring the lamellar crystals to each other and therefore presumably serve as resistance force against swelling. Specifically, the swelling onset temperatures can be controlled by the number of tie molecules and/or the degree of tension. As the number of tie molecules is smaller and/or the tie molecules are looser, the swelling is considered to occur more easily because the plasticizer more easily penetrates into the amorphous moiety.

The number of tie molecules is reportedly larger as a lamellar thickness is more uniform or the degree of crystallinity is closer to 50% (Satoru Hosoda and Yoshinobu Nozue, "Structural determinant of lamellar crystal thickness distribution of polyethylene", Japanese Journal of Polymer Science and Technology, The Society of Polymer Science, Japan, November 2014, Vol. 71, p. 484). In other words, the number of tie molecules is decreased by a more nonuniform lamellar thickness and a higher degree of crystallinity. A specific method for rendering the lamellar thickness nonuniform and enhancing the degree of crystallinity is not particularly limited. For example, the lamellar thickness can be rendered irregular by mixing a very small amount of a comonomer into ethylene and performing polymerization so that lamellar crystals consisting of only homopolyethylene and lamellar crystals containing a copolymer coexist; and a high degree

of crystallinity can be attained by carrying out a drying step under high-temperature conditions in a polyethylene powder production process.

Reduction in the degree of tension of the tie molecules (loosening of the tie molecules) requires a device to perform polymerization so as to loosen the tie molecules in a polymerization step, and to interfere with the tension of the tie molecules in the polymerization step or a drying step. Specific examples of the method for performing polymerization so as to loosen the tie molecules include, but are not particularly limited to, a method of performing polymerization in a state of a polymerization solvent supplemented with approximately 30 to 50% by mass of a plasticizer, and then removing the plasticizer from a polyethylene powder. The plasticizer exists from the beginning in an amorphous moiety between lamellar crystals of the polyethylene powder thus obtained by polymerization, and the tie molecules tend to be long. This plasticizer can be removed with hexane or the like after polymerization to obtain a polyethylene powder having the tie molecules in a loosened state.

Specific examples of the method for interfering with the tension of the tie molecules in a polymerization step include, but are not particularly limited to, a method of setting catalytic activity (weight of polyethylene obtained per catalyst having a unit weight) to 5000 (g-PE/g-catalyst) or less. Polymerization reaction for polyethylene occurs at an active point of a catalyst, i.e., inside a polyethylene powder. Therefore, large catalytic activity tends to enhance the internal stress of the polyethylene powder, which distorts a crystal structure, presumably enhancing the degree of tension of the tie molecules. Thus, the tension of the tie molecules can be suppressed by keeping catalytic activity at 5000 (g-PE/g-catalyst) or lower. The catalytic activity can be controlled by a polymerization pressure or the amount of an active species added to the catalyst.

Specific examples of the method for interfering with the tension of the tie molecules in a drying step include, but are not particularly limited to, a method of setting a drying temperature to 70°C or lower. When a polyethylene powder is dried at a high temperature, the tie molecules have tension due to the rearrangement of crystals. Thus, the tension of the tie molecules can be suppressed by setting a drying temperature to 70°C or lower and thereby suppressing the rearrangement of crystals.

In the ultrahigh-molecular-weight polyethylene powder of the present embodiment, the standard deviation s (hereinafter, also simply referred to as "s") of the swelling onset temperatures of the powders having particle sizes of $D_{10}$, $D_{50}$, and $D_{90}$ is preferably 5°C or less, more preferably 4°C or less, further preferably 3°C or less, still further preferably 2.4°C or less, particularly preferably 0.85°C or less. The lower limit of s is not particularly limited and is, for example, 0°C.

The standard deviation s of the swelling onset temperatures is determined as follows.

$$s = \sqrt{\frac{(T_S - T_{10})^2 + (T_S - T_{50})^2 + (T_S - T_{90})^2}{3}}$$

The ultrahigh-molecular-weight polyethylene powder of the present embodiment having s that falls within the range described above can be more prevented than ever from remaining undissolved, for example, when processed by wet extrusion into a fiber (e.g., high-strength fiber) or a separator for secondary battery (e.g., microporous membrane). Furthermore, the ultrahigh-molecular-weight polyethylene powder of the present embodiment having s that falls within the range described above tends to be able to produce a higher-quality shaped article, for example, a separator for secondary battery with the number of defects more reduced and thickness variations more suppressed, or a fiber with the number of thread lumps more reduced and an uneven thread diameter suppressed.

Examples of the method for controlling s to the range described above include, but are not particularly limited to, a method of, in producing an ethylene polymer, mixing ethylene with a comonomer beforehand in order to reduce an uneven concentration of each raw material, introducing the mixed gas to a polymerization vessel, and drying a polymer powder in a state uniformly spread at a thickness of 5 mm in order to reduce a locally uneven drying temperature, and/or a method of setting the residence time of a polymer powder in a dryer to 5 hours or longer in order to completely uniformly dry the polymer powder, and a method of adding a plasticizer to a polymerization solvent beforehand, well mixing them, and performing batch polymerization in order to render catalytic activity uniform.

$D_{90}/D_{10}$ of the ultrahigh-molecular-weight polyethylene powder of the present embodiment is preferably 1.2 or more and 4.0 or less, more preferably 1.5 or more and 3.5 or less, further preferably 2.0 or more and 3.0 or less. The ultrahigh-molecular-weight polyethylene powder of the present embodiment having $D_{90}/D_{10}$ that falls within the range described above has an elevated apparent density. As a result, many powders tend to be able to be packed into a package.

The ultrahigh-molecular-weight polyethylene powder of the present embodiment preferably has $D_{10}$ of 30 μm

or larger and $D_{90}$ of 425 μm or smaller. The ultrahigh-molecular-weight polyethylene powder of the present embodiment having $D_{10}$ of 30 μm or larger tends to be excellent in handleability (handling) of the powder, and the ultrahigh-molecular-weight polyethylene powder of the present embodiment having $D_{90}$ of 425 μm or smaller tends to be excellent in homogeneity and appearance of a processed product.

$D_{10}$ of the ultrahigh-molecular-weight polyethylene powder of the present embodiment is more preferably 30 μm or larger and 150 μm or smaller, further preferably 40 μm or larger and 140 μm or smaller, particularly preferably 50 μm or larger and 130 μm or smaller; $D_{50}$ thereof is preferably 60 μm or larger and 250 μm or smaller, more preferably 70 μm or larger and 240 μm or smaller, further preferably 80 μm or larger and 230 μm or smaller; and $D_{90}$ thereof is more preferably 80 μm or larger and 425 μm or smaller, further preferably 90 μm or larger and 400 μm or smaller, particularly preferably 100 μm or larger and 350 μm or smaller.

[Titanium content, aluminum content, and silicon content of ultrahigh-molecular-weight polyethylene powder]

The ultrahigh-molecular-weight polyethylene powder of the present embodiment has a titanium (Ti) content of preferably 5.0 ppm or less, more preferably 0 ppm or more and 4.0 ppm or less, further preferably 0 ppm or more and 3.0 ppm or less. The ultrahigh-molecular-weight polyethylene powder of the present embodiment has an aluminum (Al) content of preferably 5.0 ppm or less, more preferably 0 ppm or more and 4.0 ppm or less, further preferably 0 ppm or more and 3.0 ppm or less. The ultrahigh-molecular-weight polyethylene powder of the present embodiment has a silicon (Si) content of preferably 100 ppm or less, more preferably 0 ppm or more and 80 ppm or less, further preferably 0 ppm or more and 60 ppm or less.

The ultrahigh-molecular-weight polyethylene powder of the present embodiment tends to enhance safety when used in a battery by adjusting the titanium, aluminum, and silicon contents to such ranges. In general, large amounts of metals derived from catalyst residues remaining in an ultrahigh-molecular-weight polyethylene powder have a strong tendency to cause an uneven thickness of a shaped article. The Ti, Al and Si content in the ultrahigh-molecular-weight polyethylene powder can be controlled by the productivity of an ethylene homopolymer or an ethylene polymer per unit catalyst. The productivity of an ethylene homopolymer or an ethylene polymer can be controlled by a polymerization temperature, a polymerization pressure, or a slurry concentration in a reactor for production. Specifically, examples of the approach of enhancing the productivity of the ethylene homopolymer or the ethylene polymer used in the present embodiment include, but are not particularly limited to, elevation of a polymerization temperature, elevation of a polymerization pressure, and/or elevation of a slurry concentration in polymerization. In other methods, the amount of aluminum may be controlled by selecting the type of a promoter component, decreasing the concentration of the promoter component, or washing the ethylene homopolymer or the ethylene polymer with an acid or an alkali in polymerization for the ethylene homopolymer or the ethylene polymer. In the present embodiment, the Ti, Al, and Si contents can be measured by methods described in Examples mentioned later.

[Method for producing ultrahigh-molecular-weight polyethylene powder]

The method for producing the ultrahigh-molecular-weight polyethylene powder of the present embodiment is not particularly limited as long as the method produces an ultrahigh-molecular-weight polyethylene powder having the properties mentioned above. Examples thereof include a first production method comprising the steps of: in producing an ethylene polymer, mixing 0.01 to 0.05 mol% of a comonomer in terms of a gas phase concentration into ethylene, and performing polymerization; and drying a polymer powder at 100°C or higher, and a second production method comprising a polymerization step of performing polymerization in a state of a polymerization solvent supplemented with 30 to 50% by mass of a plasticizer.

The method for producing the ultrahigh-molecular-weight polyethylene powder of the present embodiment preferably comprises: a removal step of removing the plasticizer from the powder after the completion of the polymerization step of the second production method; and a drying step of setting catalytic activity during polymerization to 5000 (g-PE/g-catalyst) or less, and drying the polymer powder at 70°C or lower. The plasticizer is preferably liquid paraffin.

(Catalyst component)

Examples of the catalytic component for use in the production of the ultrahigh-molecular-weight polyethylene powder according to the present embodiment include, but are not particularly limited to, general Ziegler-Natta catalysts and metallocene catalysts.

<Ziegler-Natta catalyst>

The Ziegler-Natta catalyst is preferably a catalyst for olefin polymerization comprising a solid catalytic component

[A] and an organic metal compound component [B], wherein the solid catalytic component [A] is produced by reacting an organic magnesium compound (A-1) represented by the following formula 1 which is soluble in an inert hydrocarbon solvent with a titanium compound (A-2) represented by the following formula 2:

$$(A\text{-}1): (M^1)_\alpha(Mg)_\beta(R^2)_a(R^3)_b(Y^1)_c \ ... \qquad \text{Formula 1}$$

wherein $M^1$ represents a metal atom selected from the group consisting of groups 12, 13, and 14 of the periodic system; $R^2$ and $R^3$ each represent a hydrocarbon group having 2 or more and 20 or less carbon atoms; $Y^1$ represents any of alkoxy, siloxy, allyloxy, amino, amide, $-N=C-R^4$, $R^5$, $-SR^6$ (wherein $R^4$, $R^5$, and $R^6$ each represent a hydrocarbon group having 1 or more and 20 or less carbon atoms, and when c is 2, $Y^1$ moieties may be different from each other), and a β-keto acid residue; and α, β, a, b, and c each represent a real number that satisfies the following relationships: $0 \leq \alpha$, $0 < \beta$, $0 \leq a$, $0 \leq b$, $0 \leq c$, $0 < a + b$, $0 \leq c / (\alpha + \beta) \leq 2$, and $n\alpha + 2\beta = a + b + c$ (wherein n represents the valence of $M^1$); and

$$(A\text{-}2): Ti(OR^7)_dX^1_{(4-d)} \ ... \qquad \text{Formula 2}$$

wherein d represents a real number of 0 or larger and 4 or smaller; $R^7$ represents a hydrocarbon group having 1 or more and 20 or less carbon atoms; and $X^1$ represents a halogen atom.

Specific examples of the inert hydrocarbon solvent for use in the reaction between the compounds (A-1) and (A-2) include, but are not particularly limited to: aliphatic hydrocarbons such as pentane, hexane, and heptane; aromatic hydrocarbons such as benzene and toluene; and alicyclic hydrocarbons such as cyclohexane and methylcyclohexane.

First, the compound (A-1) will be described. The compound (A-1) is represented in the form of an organic magnesium complex compound soluble in an inert hydrocarbon solvent, and encompasses all of dihydrocarbyl magnesium compounds and their complexes with other metal compounds. The relational expression not + 2β = a + b + c of the symbols α, β, a, b, and c represents the stoichiometry of metal atom valence and substituents.

In the formula 1, specific examples of the hydrocarbon group having 2 or more and 20 or less carbon atoms, represented by $R^2$ or $R^3$ are, but are not particularly limited to, alkyl groups, cycloalkyl groups, and aryl groups, and include, for example, ethyl, propyl, butyl, pentyl, hexyl, octyl, decyl, cyclohexyl, and phenyl groups. Among them, alkyl groups are preferred. When $\alpha > 0$, a metal atom selected from the group consisting of groups 12, 13, and 14 of the periodic system can be used as the metal atom $M^1$. Examples thereof include zinc, boron, and aluminum. Among them, aluminum and zinc are preferred.

The ratio $\beta / \alpha$ of magnesium to the metal atom $M^1$ is not particularly limited and is preferably 0.1 or more and 30 or less, more preferably 0.5 or more and 10 or less. In the case of using a predetermined organic magnesium compound wherein $\alpha = 0$, for example, a compound wherein $R^2$ is 1-methylpropyl is soluble in an inert hydrocarbon solvent. Such a compound also brings about a preferred consequence to the present embodiment. It is recommended that $R^2$ and $R^3$ satisfy any one of the following three conditions (1), (2), and (3) in the formula 1 wherein $\alpha = 0$.

Condition (1): at least one of $R^2$ and $R^3$ is a secondary or tertiary alkyl group having 4 or more and 6 or less carbon atoms, preferably both of $R^2$ and $R^3$ are alkyl groups having 4 or more and 6 or less carbon atoms and at least one of the groups is a secondary or tertiary alkyl group;

Condition (2): $R^2$ and $R^3$ are alkyl groups differing in the number of carbon atoms, preferably $R^2$ is an alkyl group having 2 or 3 carbon atoms and $R^3$ is an alkyl group having 4 or more carbon atoms; and

Condition (3): at least one of $R^2$ and $R^3$ is a hydrocarbon group having 6 or more carbon atoms, preferably, an alkyl group wherein the total number of carbon atoms contained in $R^2$ and $R^3$ is 12 or more.

Hereinafter, these groups will be shown specifically. In Condition (1), specific examples of the secondary or tertiary alkyl group having 4 or more and 6 or less carbon atoms include 1-methylpropyl, 2-methylpropyl, 1,1-dimethylethyl, 2-methylbutyl, 2-ethylpropyl, 2,2-dimethylpropyl, 2-methylpentyl, 2-ethylbutyl, 2,2-dimethylbutyl, and 2-methyl-2-ethylpropyl groups. Among them, a 1-methylpropyl group is particularly preferred.

In Condition (2), specific examples of the alkyl group having 2 or 3 carbon atoms include ethyl, 1-methylethyl, and propyl groups. Among them, an ethyl group is particularly preferred. Specific examples of the alkyl group having 4 or more carbon atoms include, but are not particularly limited to, butyl, pentyl, hexyl, heptyl, and octyl groups. Among them, butyl and hexyl groups are particularly preferred.

Alternatively, in Condition (3), specific examples of the hydrocarbon group having 6 or more carbon atoms include, but are not particularly limited to, hexyl, heptyl, octyl, nonyl, decyl, phenyl, and 2-naphthyl groups. Among these hydrocarbon groups, alkyl groups are preferred. Among the alkyl groups, hexyl and octyl groups are particularly preferred.

According to general tendencies, an alkyl group containing a larger number of carbon atoms is more soluble in an inert hydrocarbon solvent and forms a solution having a higher viscosity. A moderate long chain alkyl group is

therefore preferably used in terms of handling. The organic magnesium compound can be diluted, for use, with an inert hydrocarbon solvent. This solution can be used without any problem even if trace amounts of Lewis basic compounds such as ethers, esters, and amines are contained or remain therein.

Next, $Y^1$ will be described. In the formula 1, $Y^1$ is any of alkoxy, siloxy, allyloxy, amino, amide, -N=C-$R^4$, $R^5$, -$SR^6$ (wherein $R^4$, $R^5$, and $R^6$ each independently represent a hydrocarbon group having 2 or more and 20 or less carbon atoms), and a β-keto acid residue.

In the formula 1, the hydrocarbon group represented by $R^4$, $R^5$, or $R^6$ is preferably an alkyl or aryl group having 1 or more and 12 or less carbon atoms, particularly preferably an alkyl or aryl group having 3 or more and 10 or less carbon atoms. Examples include, but are not particularly limited to, methyl, ethyl, propyl, 1-methylethyl, butyl, 1-methylpropyl, 1,1-dimethylethyl, pentyl, hexyl, 2-methylpentyl, 2-ethylbutyl, 2-ethylpentyl, 2-ethylhexyl, 2-ethyl-4-methylpentyl, 2-propylheptyl, 2-ethyl-5-methyloctyl, octyl, nonyl, decyl, phenyl, and naphthyl groups. Among them, butyl, 1-methylpropyl, 2-methylpentyl and 2-ethylhexyl groups are particularly preferred.

In the formula 1, $Y^1$ is preferably an alkoxy group or a siloxy group. Specific examples of the alkoxy group preferably include, but are not particularly limited to, methoxy, ethoxy, propoxy, 1-methylethoxy, butoxy, 1-methylpropoxy, 1,1-dimethylethoxy, pentoxy, hexoxy, 2-methylpentoxy, 2-ethylbutoxy, 2-ethylpentoxy, 2-ethylhexoxy, 2-ethyl-4-methylpentoxy, 2-propylheptoxy, 2-ethyl-5-methyloctoxy, octoxy, phenoxy, and naphthoxy groups. Among them, butoxy, 1-methylpropoxy, 2-methylpentoxy, and 2-ethylhexoxy groups are more preferred. Specific examples of the siloxy group preferably include, but are not particularly limited to, hydrodimethylsiloxy, ethylhydromethylsiloxy, diethylhydrosiloxy, trimethylsiloxy, ethyldimethylsiloxy, diethylmethylsiloxy, and triethylsiloxy groups. Among them, hydrodimethylsiloxy, ethylhydromethylsiloxy, diethylhydrosiloxy, and trimethylsiloxy groups are more preferred.

In the present embodiment, the compound (A-1) can be synthesized by any method without particular limitations and may be synthesized by reacting, for example, an organic magnesium compound selected from the group consisting of the formulas $R^2MgX^2$ and $R^2Mg$ (wherein $R^2$ is as defined above, and $X^1$ represents halogen) with an organic metal compound selected from the group consisting of the formulas $M^1R^3{}_n$ and $M^1R^3{}_{(n-1)}H$ (wherein $M^1$ and $R^3$ are as defined above, and n represents the valence of $M^1$) at 25°C or higher and 150°C or lower in an inert hydrocarbon solvent and, if necessary, subsequently with a compound represented by the formula $Y^1$-H (wherein $Y^1$ is as defined above) or with an organic magnesium compound and/or an organic aluminum compound having a functional group represented by $Y^1$. In the approach of reacting the organic magnesium compound soluble in an inert hydrocarbon solvent with a compound represented by the formula $Y^1$-H, the order in which the compounds are added to the reaction system is not particularly limited. Any of the following methods can be used: for example, the compound represented by the formula $Y^1$-H is added into the organic magnesium compound; the organic magnesium compound is added into the compound represented by the formula $Y^1$-H; and both of the compounds are added at the same time.

In the present embodiment, the molar composition ratio $c / (\alpha + \beta)$ of $Y^1$ to all metal atoms in the compound (A-1) is $0 \leq c / (\alpha + \beta) \leq 2$, preferably $0 \leq c / (\alpha + \beta) < 1$. The compound (A-1) wherein the molar composition ratio of $Y^1$ to all metal atoms is 2 or less tends to have better reactivity with the compound (A-2).

Next, the compound (A-2) will be described. The compound (A-2) is a titanium compound represented by the formula 2:

$$\text{(A-2): } Ti(OR^7)_d X^1{}_{(4-d)} \cdots \qquad \text{Formula 2}$$

wherein d represents a real number of 0 or larger and 4 or smaller; $R^7$ represents a hydrocarbon group having 1 or more and 20 or less carbon atoms; and $X^1$ represents a halogen atom.

In the formula 2, d is preferably 0 or larger and 1 or smaller, further preferably 0. In the formula 2, specific examples of the hydrocarbon group represented by $R^7$ include, but are not particularly limited to: aliphatic hydrocarbon groups such as methyl, ethyl, propyl, butyl, pentyl, hexyl, 2-ethylhexyl, heptyl, octyl, decyl, and allyl groups; alicyclic hydrocarbon groups such as cyclohexyl, 2-methylcyclohexyl, and cyclopentyl groups; and aromatic hydrocarbon groups such as phenyl and naphthyl groups. Among them, aliphatic hydrocarbon groups are preferred. Examples of the halogen represented by $X^1$ include chlorine, bromine, and iodine. Among them, chlorine is preferred. In the present embodiment, the compound (A-2) is particularly preferably titanium tetrachloride. In the present embodiment, two or more compounds selected from these compounds may be used as a mixture.

Next, the reaction between the compounds (A-1) and (A-2) will be described. The reaction is preferably carried out in an inert hydrocarbon solvent and further preferably carried out in an aliphatic hydrocarbon solvent such as hexane or heptane. In the reaction, the molar ratio between (A-1) and (A-2) is not particularly limited, and the molar ratio (Ti / Mg) of Ti atom contained in the compound (A-2) to Mg atom contained in the compound (A-1) is preferably 0.1 or more and 10 or less, more preferably 0.3 or more and 3 or less. The reaction temperature is not particularly limited and is preferably within the range of -80°C or higher and 150°C or lower, further preferably within the range of -40°C or higher and 100°C or lower. The order in which the compounds (A-1) and (A-2) are added to the reaction system is not particularly limited. Any of the following methods can be used: the compound (A-2) is added subsequently to the compound (A-1);

the compound (A-1) is added subsequently to the compound (A-2); and the compounds (A-1) and (A-2) are added at the same time. The method of adding the compounds (A-1) and (A-2) at the same time is preferred. In the present embodiment, the solid catalytic component [A] obtained by the reaction is used as a slurry solution with an inert hydrocarbon solvent.

Another example of the Ziegler-Natta catalytic component used in the present embodiment is preferably a catalyst for olefin polymerization comprising a solid catalytic component [C] and an organic metal compound component [B], wherein the solid catalytic component [C] is produced by reacting an organic magnesium compound (C-1) represented by the formula 3 which is soluble in an inert hydrocarbon solvent with a chlorinating agent (C-2) represented by the formula 4, and allowing an organic magnesium compound (C-4) represented by the formula 5 which is soluble in an inert hydrocarbon solvent and a titanium compound (C-5) represented by the formula 6 to be supported by a carrier (C-3) thus prepared:

$$(C\text{-}1): (M^2)_\gamma(Mg)_\delta(R^8)_e(R^9)_f(OR^{10})_g \ldots \qquad \text{Formula 3}$$

wherein $M^2$ represents a metal atom selected from the group consisting of groups 12, 13, and 14 of the periodic system; $R^8$, $R^9$, and $R^{10}$ each represent a hydrocarbon group having 2 or more and 20 or less carbon atoms; and $\gamma$, $\delta$, e, f, and g each represent a real number that satisfies the following relationships: $0 \leq \gamma$, $0 < \delta$, $0 \leq e$, $0 \leq f$, $0 \leq g$, $0 < e + f$, $0 \leq g / (\gamma + \delta) \leq 2$, and $k\gamma + 2\delta = e + f + g$ (wherein k represents the valence of $M^2$);

$$(C\text{-}2) : H_hSiCl_iR^{11}{}_{(4-(h+i))} \ldots \qquad \text{Formula 4}$$

wherein $R^{11}$ represents a hydrocarbon group having 1 or more and 12 or less carbon atoms; and h and i each represent a real number that satisfies the following relationships: $0 < h$, $0 < i$, and $0 < h + i \leq 4$;

$$(C\text{-}4) : (M^1)_\alpha(Mg)_\beta(R^2)_a(R^3)_bY^1{}_c \ldots \qquad \text{Formula 5}$$

wherein $M^1$ represents a metal atom selected from the group consisting of groups 12, 13, and 14 of the periodic system; $R^2$ and $R^3$ each represent a hydrocarbon group having 2 or more and 20 or less carbon atoms; $Y^1$ represents any of alkoxy, siloxy, allyloxy, amino, amide, $-N=C-R^4$, $R^5$, $-SR^6$ (wherein $R^4$, $R^5$, and $R^6$ each represent a hydrocarbon group having 1 or more and 20 or less carbon atoms, and when c is 2, $Y^1$ moieties may be different from each other), and a $\beta$-keto acid residue; and $\alpha$, $\beta$, a, b, and c each represent a real number that satisfies the following relationships: $0 \leq \alpha$, $0 < \beta$, $0 \leq a$, $0 \leq b$, $0 \leq c$, $0 < a + b$, $0 \leq c / (\alpha + \beta) \leq 2$, and $n\alpha + 2\beta = a + b + c$ (wherein n represents the valence of $M^1$); and

$$(C\text{-}5) : Ti(OR^7)_dX^1{}_{(4-d)} \ldots \qquad \text{Formula 6}$$

wherein d represents a real number of 0 or larger and 4 or smaller; $R^7$ represents a hydrocarbon group having 1 or more and 20 or less carbon atoms; and $X^1$ represents a halogen atom.

First, the compound (C-1) will be described. The compound (C-1) is represented in the form of an organic magnesium complex compound soluble in an inert hydrocarbon solvent, but encompasses all of dihydrocarbyl magnesium compounds and their complexes with other metal compounds. In the formula 3, the relational expression $ky + 2\delta = e + f + g$ of the symbols $\gamma$, $\delta$, e, f, and g represents the stoichiometry of metal atom valence and substituents.

In the formula, specific examples of the hydrocarbon group represented by $R^8$ or $R^9$ include, but are not particularly limited to, alkyl groups, cycloalkyl groups, and aryl groups, for example, methyl, ethyl, propyl, butyl, pentyl, hexyl, octyl, decyl, cyclohexyl, and phenyl groups. Among them, alkyl groups are preferred for each of $R^8$ and $R^9$. When $\gamma > 0$, a metal atom selected from the group consisting of groups 12, 13, and 14 of the periodic system can be used as the metal atom $M^2$. Examples thereof include zinc, boron, and aluminum. Among them, aluminum and zinc are particularly preferred.

The ratio $\delta / \gamma$ of magnesium to the metal atom $M^2$ is not particularly limited and is preferably 0.1 or more and 30 or less, further preferably 0.5 or more and 10 or less. In the case of using a predetermined organic magnesium compound wherein $\gamma = 0$, for example, a compound wherein $R^8$ is 1-methylpropyl is soluble in an inert hydrocarbon solvent. Such a compound also brings about a preferred consequence to the present embodiment. It is recommended that $R^8$ and $R^9$ satisfy any one of the following three conditions (1), (2), and (3) in the formula 3 wherein $\gamma = 0$.

Condition (1): at least one of $R^8$ and $R^9$ is a secondary or tertiary alkyl group having 4 or more and 6 or less carbon atoms, preferably, both of $R^8$ and $R^9$ are alkyl groups having 4 or more and 6 or less carbon atoms and at least one of the groups is a secondary or tertiary alkyl group;

Condition (2): $R^8$ and $R^9$ are alkyl groups differing in the number of carbon atoms, preferably, $R^8$ is an alkyl group having 2 or 3 carbon atoms and $R^9$ is an alkyl group having 4 or more carbon atoms; and

Condition (3): at least one of $R^8$ and $R^9$ is a hydrocarbon group having 6 or more carbon atoms, preferably, an

alkyl group wherein the total number of carbon atoms contained in $R^8$ and $R^9$ is 12 or more.

Hereinafter, these groups will be shown specifically. In Condition (1), specific examples of the secondary or tertiary alkyl group having 4 or more and 6 or less carbon atoms include 1-methylpropyl, 2-methylpropyl, 1,1-dimethylethyl, 2-methylbutyl, 2-ethylpropyl, 2,2-dimethylpropyl, 2-methylpentyl, 2-ethylbutyl, 2,2-dimethylbutyl, and 2-methyl-2-ethylpropyl groups. Among them, a 1-methylpropyl group is particularly preferred.

In Condition (2), examples of the alkyl group having 2 or 3 carbon atoms include ethyl, 1-methylethyl, and propyl groups. Among them, an ethyl group is particularly preferred. Specific examples of the alkyl group having 4 or more carbon atoms, but are not particularly limited to, butyl, pentyl, hexyl, heptyl, and octyl groups. Among them, butyl and hexyl groups are particularly preferred.

Alternatively, in Condition (3), specific examples of the hydrocarbon group having 6 or more carbon atoms include, but are not particularly limited to, hexyl, heptyl, octyl, nonyl, decyl, phenyl, and 2-naphthyl groups. Among these hydrocarbon groups, alkyl groups are preferred. Among the alkyl groups, hexyl and octyl groups are particularly preferred.

According to general tendencies, an alkyl group containing a larger number of carbon atoms is more soluble in an inert hydrocarbon solvent and forms a solution having a higher viscosity. A moderately long-chain alkyl group is therefore preferably used in terms of handling. The organic magnesium compound is used as an inert hydrocarbon solution. This solution can be used without any problem even if trace amounts of Lewis basic compounds such as ethers, esters, and amines are contained or remain therein.

Next, the alkoxy group ($OR^{10}$) will be described. The hydrocarbon group represented by $R^{10}$ is preferably an alkyl or aryl group having 1 or more and 12 or less carbon atoms, particularly preferably an alkyl or aryl group having 3 or more and 10 or less carbon atoms. Specific examples of $R^{10}$ include, but are not particularly limited to, methyl, ethyl, propyl, 1-methylethyl, butyl, 1-methylpropyl, 1,1-dimethylethyl, pentyl, hexyl, 2-methylpentyl, 2-ethylbutyl, 2-ethylpentyl, 2-ethylhexyl, 2-ethyl-4-methylpentyl, 2-propylheptyl, 2-ethyl-5-methyloctyl, octyl, nonyl, decyl, phenyl, and naphthyl groups. Among them, butyl, 1-methylpropyl, 2-methylpentyl, and 2-ethylhexyl groups are particularly preferred.

In the present embodiment, the compound (C-1) can be synthesized by any method without particular limitations and is preferably synthesized by a method of reacting an organic magnesium compound selected from the group consisting of the formulas $R^8MgX^1$ and $R^8Mg$ (wherein $R^8$ is as defined above, and $X^1$ represents a halogen atom) with an organic metal compound selected from the group consisting of the formulas $M^2R^9_k$ and $M^2R^9_{(k-1)}H$ (wherein $M^2$, $R^9$, and k are as defined above) at a temperature of 25°C or higher and 150°C or lower in an inert hydrocarbon solvent and, if necessary, subsequently with an alcohol having a hydrocarbon group represented by $R^9$ (wherein $R^9$ is as defined above) or an alkoxy magnesium compound and/or an alkoxy aluminum compound having a hydrocarbon group represented by $R^9$ which is soluble in an inert hydrocarbon solvent.

In the approach of reacting the organic magnesium compound soluble in an inert hydrocarbon solvent with an alcohol, the order in which the compounds are added to the reaction system is not particularly limited. Any of the following methods can be used: the alcohol is added into the organic magnesium compound; the organic magnesium compound is added into the alcohol; and both of the compounds are added at the same time. In the present embodiment, the ratio between the organic magnesium compound soluble in an inert hydrocarbon solvent and the alcohol in the reaction is not particularly limited, and the molar composition ratio $g / (\gamma + \delta)$ of the alkoxy group to all metal atoms in the resulting alkoxy group-containing organic magnesium compound is $0 \leq g / (\gamma + \delta) \leq 2$, preferably $0 \leq g / (\gamma + \delta) < 1$.

Next, the compound (C-2) will be described. The compound (C-2) is a silicon chloride compound having at least one Si-H bond, represented by the formula 4:

$$(C\text{-}2): H_hSiCl_iR^{11}_{(4-(h+i))} \cdots \qquad \text{Formula 4}$$

wherein $R^{11}$ represents a hydrocarbon group having 1 or more and 12 or less carbon atoms; and h and i each represent a real number that satisfies the following relationships: $0 < h$, $0 < i$, and $0 < h + i \leq 4$.

In the formula 4, specific examples of the hydrocarbon group represented by $R^{11}$ include, but are not particularly limited to, aliphatic hydrocarbon groups, alicyclic hydrocarbon groups, and aromatic hydrocarbon groups, for example, methyl, ethyl, propyl, 1-methylethyl, butyl, pentyl, hexyl, octyl, decyl, cyclohexyl, and phenyl groups. Among them, alkyl groups having 1 or more and 10 or less carbon atoms are preferred, and alkyl groups having 1 or more and 3 or less carbon atoms, such as methyl, ethyl, propyl, and 1-methylethyl group are further preferred. Each of h and i is a number larger than 0 that satisfies the relationship $h + i \leq 4$. Preferably, i is 2 or larger and 3 or smaller.

Specific examples of such a compound include, but are not particularly limited to, $HSiCl_3$, $HSiCl_2CH_3$, $HSiCl_2C_2H_5$, $HSiCl_2(C_3H_7)$, $HSiCl_2(2\text{-}C_3H_7)$, $HSiCl_2(C_4H_9)$, $HSiCl_2(C_6H_5)$, $HSiCl_2(4\text{-}Cl\text{-}C_6H_4)$, $HSiCl_2(CH{=}CH_2)$, $HSiCl_2(CH_2C_6H_5)$, $HSiCl_2(1\text{-}C_{10}H_7)$, $HSiCl_2(CH_2CH{=}CH_2)$, $H_2SiCl(CH_3)$, $H_2SiCl(C_2H_5)$, $HSiCl(CH_3)_2$, $HSiCl(C_2H_5)_2$, $HSiCl(CH_3)(2\text{-}C_3H_7)$, $HSiCl(CH_3)(C_6H_5)$, and $HSiCl(C_6H_5)_2$. These silicon chloride compounds are used each alone or as a mixture of two or more types selected from these compounds. Among them, $HSiCl_3$, $HSiCl_2CH_3$, $HSiCl(CH_3)_2$, and $HSiCl_2(C_3H_7)$ are preferred, and $HSiCl_3$ and $HSiCl_2CH_3$ are more preferred.

Next, the reaction between the compounds (C-1) and (C-2) will be described. For the reaction, the compound

(C-2) is preferably used after being diluted in advance with an inert hydrocarbon solvent, a chlorinated hydrocarbon (e.g., 1,2-dichloroethane, o-dichlorobenzene, or dichloromethane), an ether vehicle (e.g., diethyl ether or tetrahydrofuran), or a mixed vehicle thereof. Among them, an inert hydrocarbon solvent is more preferred in terms of the performance of the catalyst. The ratio between (C-1) and (C-2) in the reaction is not particularly limited and is preferably 0.01 mol or higher and 100 mol or lower, further preferably 0.1 mol or higher and 10 mol or lower, of silicon atom contained in the compound (C-2) per 1 mol of magnesium atom contained in the compound (C-1).

The method for reacting the compounds (C-1) and (C-2) is not particularly limited. Any of the following methods can be used: the compounds (C-1) and (C-2) are reacted while introduced at the same time to a reactor (simultaneous addition method); a reactor is charged with the compound (C-2) in advance, and then, the compound (C-1) is introduced to the reactor; and a reactor is charged with the compound (C-1) in advance, and then, the compound (C-2) is introduced to the reactor. Among them, the method of charging a reactor with the compound (C-2) in advance and then introducing the compound (C-1) to the reactor is preferred. The carrier (C-3) obtained by the reaction is preferably separated by filtration or decantation and then thoroughly washed with an inert hydrocarbon solvent to remove unreacted materials or byproducts, etc.

The temperature of the reaction between the compounds (C-1) and (C-2) is not particularly limited and is preferably 25°C or higher and 150°C or lower, more preferably 30°C or higher and 120°C or lower, further preferably 40°C or higher and 100°C or lower. In the simultaneous addition method in which the compounds (C-1) and (C-2) are reacted while introduced at the same time to a reactor, the reaction temperature is preferably adjusted to a predetermined temperature by preliminarily setting the temperature of the reactor to a predetermined temperature and adjusting the temperature in the reactor to a predetermined temperature while performing the simultaneous addition. In the method of charging a reactor with the compound (C-2) in advance and then introducing the compound (C-1) to the reactor, the reaction temperature is preferably adjusted to a predetermined temperature by adjusting the temperature of the reactor charged with the silicon chloride compound to a predetermined temperature and adjusting the temperature in the reactor to a predetermined temperature while introducing the organic magnesium compound to the reactor. In the method of charging a reactor with the compound (C-1) in advance and then introducing the compound (C-2) to the reactor, the reaction temperature is preferably adjusted to a predetermined temperature by adjusting the temperature of the reactor charged with the compound (C-1) to a predetermined temperature and adjusting the temperature in the reactor to a predetermined temperature while introducing the compound (C-2) to the reactor.

Next, the organic magnesium compound (C-4) will be described. The compound (C-4) is preferably represented by the formula 5(C-4).

$$\text{(C-4)}: (M^1)_\alpha(Mg)_\beta(R^2)_a(R^3)_bY^1_c \cdots \qquad \text{Formula 5}$$

wherein $M^1$ represents a metal atom selected from the group consisting of groups 12, 13, and 14 of the periodic system; $R^2$ and $R^3$ each represent a hydrocarbon group having 2 or more and 20 or less carbon atoms; $Y^1$ represents any of alkoxy, siloxy, allyloxy, amino, amide, $-N=C-R^4$, $R^5$, $-SR^6$ (wherein $R^4$, $R^5$, and $R^6$ each represent a hydrocarbon group having 1 or more and 20 or less carbon atoms, and when c is 2, $Y^1$ moieties may be different from each other), and a $\beta$-keto acid residue; and $\alpha$, $\beta$, a, b, and c each represent a real number that satisfies the following relationships: $0 \leq \alpha$, $0 < \beta$, $0 \leq a$, $0 \leq b$, $0 < a + b$, $0 \leq c / (\alpha + \beta) \leq 2$, and $n\alpha + 2\beta = a + b + c$ (wherein n represents the valence of $M^1$).

The amount of the compound (C-4) used is preferably 0.1 or more and 10 or less, more preferably 0.5 or more and 5 or less, in terms of the molar ratio of magnesium atom contained in the compound (C-4) to titanium atom contained in the compound (C-5).

The temperature of the reaction between the compounds (C-4) and (C-5) is not particularly limited and is preferably -80°C or higher and 150°C or lower, more preferably within the range of -40°C or higher and 100°C or lower.

The concentration of the compound (C-4) in use is not particularly limited and is preferably 0.1 mol/L or higher and 2 mol/L or lower, more preferably 0.5 mol/L or higher and 1.5 mol/L or lower, on the basis of titanium atom contained in the compound (C-4). An inert hydrocarbon solvent is preferably used for diluting the compound (C-4).

The order in which the compounds (C-4) and (C-5) are added to the carrier (C-3) is not particularly limited. Any of the following methods can be used: the compound (C-5) is added subsequently to the compound (C-4); the compound (C-4) is added subsequently to the compound (C-5); and the compounds (C-4) and (C-5) are added at the same time. Among them, the method of adding the compounds (C-4) and (C-5) at the same time is preferred. The reaction between the compounds (C-4) and (C-5) is carried out in an inert hydrocarbon solvent, preferably in an aliphatic hydrocarbon solvent such as hexane or heptane. The catalyst thus obtained is used as a slurry solution with an inert hydrocarbon solvent.

Next, the compound (C-5) will be described. In the present embodiment, the compound (C-5) is a titanium compound represented by the formula 6:

$$\text{(C-5)}: Ti(OR^7)_dX^1_{(4-d)} \cdots \qquad \text{Formula 6}$$

wherein d represents a real number of 0 or larger and 4 or smaller; $R^7$ represents a hydrocarbon group having 1 or more and 20 or less carbon atoms; and $X^1$ represents a halogen atom.

In the formula 6, specific examples of the hydrocarbon group represented by $R^7$ include, but are not particularly limited to: aliphatic hydrocarbon groups such as methyl, ethyl, propyl, butyl, pentyl, hexyl, 2-ethylhexyl, heptyl, octyl, decyl, and allyl groups; alicyclic hydrocarbon groups such as cyclohexyl, 2-methylcyclohexyl, and cyclopentyl groups; and aromatic hydrocarbon groups such as phenyl and naphthyl groups. Among them, aliphatic hydrocarbon groups are preferred. Specific examples of the halogen represented by $X^1$ include, but are not particularly limited to, chlorine, bromine, and iodine. Among them, chlorine is preferred. One compound selected from these compounds may be used alone as the compound (C-5), or two or more compounds selected from these compounds may be used as a mixture.

The amount of the compound (C-5) used is not particularly limited and is preferably 0.01 or more and 20 or less, particularly preferably 0.05 or more and 10 or less, in terms of the molar ratio to magnesium atom contained in the carrier (C-3).

The reaction temperature for the compound (C-5) is not particularly limited and is preferably -80°C or higher and 150°C or lower, further preferably within the range of -40°C or higher and 100°C or lower.

In the present embodiment, the method for allowing the compound (C-5) to be supported by the carrier (C-3) is not particularly limited and may involve reacting an excess of the compound (C-5) with the carrier (C-3) and/or using a third component to efficiently support the compound (C-5). A method of achieving this supporting through the reaction between the compound (C-5) and the organic magnesium compound (C-4) is preferred.

Next, the organic metal compound component [B] for use in the present embodiment will be described. The solid catalytic component for use in the present embodiment can serve as a highly active catalyst for polymerization by combination with the organic metal compound component [B]. The organic metal compound component [B] is also called a "promoter." The organic metal compound component [B] is preferably a compound containing a metal selected from the group consisting of groups 1, 2, 12, and 13 of the periodic system, particularly preferably an organic aluminum compound and/or an organic magnesium compound.

Compounds represented by the formula 7 are preferably used each alone or as a mixture as the organic aluminum compound:

$$AlR^{12}_{j}Z^{1}_{(3-j)} \cdots \qquad \text{Formula 7}$$

wherein $R^{12}$ represents a hydrocarbon group having 1 or more and 20 or less carbon atoms; $Z^1$ represents a group selected from the group consisting of hydrogen, halogen, alkoxy, allyloxy, and siloxy groups; and j represents any number of 2 or larger and 3 or smaller.

In the formula 7, specific examples of the hydrocarbon group having 1 or more and 20 or less carbon atoms, represented by $R^{12}$ include, but are not particularly limited to, aliphatic hydrocarbons, aromatic hydrocarbons, and alicyclic hydrocarbons, for example, trialkyl aluminum compounds such as trimethyl aluminum, triethyl aluminum, tripropyl aluminum, tributyl aluminum, tri(2-methylpropyl) aluminum (or triisobutyl aluminum), tripentyl aluminum, tri(3-methylbutyl) aluminum, trihexyl aluminum, trioctyl aluminum, and tridecyl aluminum; aluminum halide compounds such as diethyl aluminum chloride, ethyl aluminum dichloride, bis(2-methylpropyl) aluminum chloride, ethyl aluminum sesquichloride, and diethyl aluminum bromide; alkoxy aluminum compounds such as diethyl aluminum ethoxide and bis(2-methylpropyl) aluminum butoxide; siloxy aluminum compounds such as dimethylhydrosiloxy aluminum dimethyl, ethylmethylhydrosiloxy aluminum diethyl, and ethyldimethylsiloxy aluminum diethyl; and mixtures thereof. Among them, trialkyl aluminum compounds are particularly preferred.

The organic magnesium compound is preferably an organic magnesium compound represented by the formula 3 which is soluble in an inert hydrocarbon solvent:

$$(M^2)_{\gamma}(Mg)_{\delta}(R^8)_{e}(R^9)_{f}(OR^{10})_{g} \cdots \qquad \text{Formula 3}$$

wherein $M^2$ represents a metal atom selected from the group consisting of groups 12, 13, and 14 of the periodic system; $R^8$, $R^9$, and $R^{10}$ each represent a hydrocarbon group having 2 or more and 20 or less carbon atoms; and $\gamma$, $\delta$, e, f, and g each represent a real number that satisfies the following relationships: $0 \leq \gamma$, $0 < \delta$, $0 \leq e$, $0 \leq f$, $0 \leq g$, $0 < e + f$, $0 \leq g / (y + \delta) \leq 2$, and $ky + 2\delta = e + f + g$ (wherein k represents the valence of $M^2$).

This organic magnesium compound is represented in the form of an organic magnesium complex compound soluble in an inert hydrocarbon solvent, but encompasses all of dialkyl magnesium compounds and their complexes with other metal compounds. Although $\gamma$, $\delta$, e, f, g, $M^2$, $R^8$, $R^9$, and $OR^{10}$ are as already defined, this organic magnesium compound is preferably a compound wherein the ratio $\delta / \gamma$ is in the range of 0.5 or more and 10 or less, more preferably a compound wherein $M^2$ is aluminum, because a compound having higher solubility in an inert hydrocarbon solvent is more preferred.

The ratio between the solid catalytic component and the organic metal compound component [B] to be combined is not particularly limited and is preferably 1 mmol or higher and 3,000 mmol or lower of the organic metal compound component [B] per g of the solid catalytic component.

<Metallocene catalyst>

A general transition metal compound is used in cases using the metallocene catalyst. Examples of the method for producing the metallocene catalyst include, but are not particularly limited to, a production method described in Japanese Patent No. 4868853. Such a metallocene catalyst is constituted by: two catalytic components of a) a transition metal compound having a cyclic η-binding anionic ligand and b) an activating agent capable of forming a complex that exerts catalytic activity through reaction with the transition metal compound.

The transition metal compound having a cyclic η-binding anionic ligand used in the present embodiment can be represented by, for example, the following formula 8:

$$L^1_jW_kM^3X^2_pX^3_q \ldots \qquad \text{Formula 8}$$

In the formula 8, each $L^1$ independently represents a cyclic η-binding anionic ligand selected from the group consisting of a cyclopentadienyl group, an indenyl group, a tetrahydroindenyl group, a fluorenyl group, a tetrahydrofluorenyl group, and an octahydrofluorenyl group, and this ligand optionally has 1 to 8 substituents, wherein the substituents each independently represent a substituent having up to 20 non-hydrogen atoms, selected from the group consisting of hydrocarbon groups having 1 to 20 carbon atoms, halogen atoms, halogen-substituted hydrocarbon groups having 1 to 12 carbon atoms, aminohydrocarbyl groups having 1 to 12 carbon atoms, hydrocarbyloxy groups having 1 to 12 carbon atoms, dihydrocarbylamino groups having 1 to 12 carbon atoms, hydrocarbylphosphino groups having 1 to 12 carbon atoms, a silyl group, an aminosilyl group, hydrocarbyloxysilyl groups having 1 to 12 carbon atoms, and halosilyl groups.

In the formula 8, $M^3$ represents a transition metal selected from transition metal groups belonging to group 4 of the periodic system, wherein the formal oxidation number is +2, +3, or +4, and this transition metal is bonded to at least one ligand $L^1$ via $\eta^5$ bond.

In the formula 8, W represents a divalent substituent having up to 50 non-hydrogen atoms, and this divalent substituent monovalently binds to each of $L^1$ and $M^3$ and thereby forms a metallacycle in collaboration with $L^1$ and $M^3$. Each $X^2$ independently represents an anionic σ-binding type ligand having up to 60 non-hydrogen atoms, selected from the group consisting of a monovalent anionic σ-binding type ligand, a divalent anionic σ-binding type ligand divalently binding to $M^3$, and a divalent anionic σ-binding type ligand monovalently binding to each of $L^1$ and $M^3$.

In the formula 8, each $X^2$ independently represents a neutral Lewis base-coordinating compound having up to 40 non-hydrogen atoms, and $X^3$ represents a neutral Lewis base-coordinating compound.

j is 1 or 2 provided that when j is 2, two ligands $L^1$ are optionally bonded to each other via a divalent group having up to 20 non-hydrogen atoms, wherein the divalent group is a group selected from the group consisting of hydrocarbadiyl groups having 1 to 20 carbon atoms, halohydrocarbadiyl groups having 1 to 12 carbon atoms, hydrocarbyleneoxy groups having 1 to 12 carbon atoms, hydrocarbyleneamino groups having 1 to 12 carbon atoms, a silanediyl group, halosilanediyl groups, and a silyleneamino group.

k is 0 or 1. p is 0, 1, or 2 provided that: when $X^2$ is a monovalent anionic σ-binding type ligand or a divalent anionic σ-binding type ligand binding to $L^1$ and $M^3$, p is an integer smaller by at least 1 than the formal oxidation number of $M^3$; and when $X^2$ is a divalent anionic σ-binding type ligand binding only to $M^3$, p is an integer smaller by at least (j + 1) than the formal oxidation number of $M^3$. q is 0, 1, or 2.

Examples of the ligand $X^2$ in the compound of the formula 8 include halides, hydrocarbon groups having 1 to 60 carbon atoms, hydrocarbyloxy groups having 1 to 60 carbon atoms, hydrocarbylamide groups having 1 to 60 carbon atoms, hydrocarbyl phosphide groups having 1 to 60 carbon atoms, hydrocarbyl sulfide groups having 1 to 60 carbon atoms, a silyl group, and combinations thereof.

Examples of the neutral Lewis base-coordinating compound $X^3$ in the compound of the formula 8 include phosphines, ethers, amines, olefins having 2 to 40 carbon atoms, dienes having 1 to 40 carbon atoms, and divalent groups induced from these compounds.

In the present embodiment, the transition metal compound having a cyclic η-binding anionic ligand is preferably a transition metal compound represented by the formula 1 wherein j = 1. Preferred examples of the compound represented by the formula 1 wherein j = 1 include compounds represented by the following formula 9:

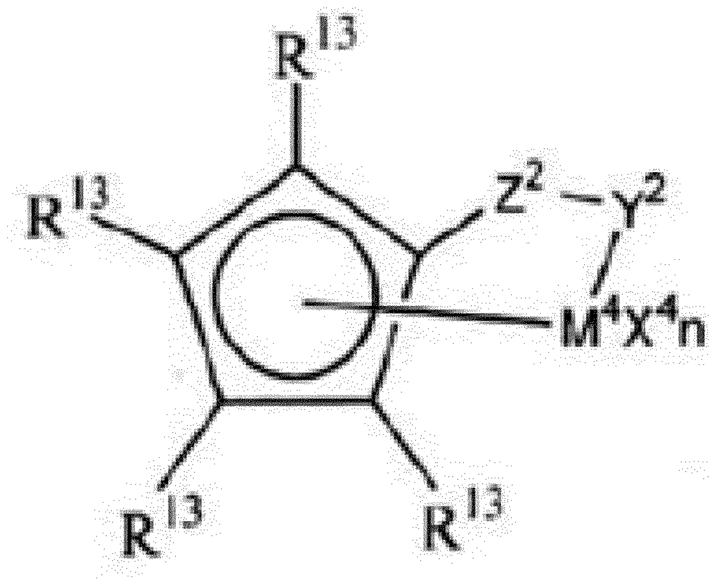

• • • Formula 9

In the formula 9, $M^4$ represents a transition metal selected from the group consisting of titanium, zirconium, nickel, and hafnium, wherein the formal oxidation number of the transition metal is +2, +3, or +4. Each $R^{13}$ independently represents a hydrogen atom or a substituent having up to 20 non-hydrogen atoms, selected from the group consisting of hydrocarbon groups having 1 to 8 carbon atoms, a silyl group, a germyl group, a cyano group, halogen atoms, and combinations thereof provided that when the substituent $R^{13}$ is a hydrocarbon group having 1 to 8 carbon atoms, a silyl group, or a germyl group, two adjacent substituents $R^{13}$ are optionally bonded to each other to form a divalent group, which can form a ring in collaboration with the bond between two carbon atoms of the cyclopentadienyl ring bonded to these two adjacent substituents $R^{13}$, respectively.

In the formula 9, each $X^4$ independently represents a substituent having up to 20 non-hydrogen atoms, selected from the group consisting of halides, hydrocarbon groups having 1 to 20 carbon atoms, hydrocarbyloxy groups having 1 to 18 carbon atoms, hydrocarbylamino groups having 1 to 18 carbon atoms, a silyl group, hydrocarbylamide groups having 1 to 18 carbon atoms, hydrocarbyl phosphide groups having 1 to 18 carbon atoms, hydrocarbyl sulfide groups having 1 to 18 carbon atoms, and combinations thereof provided that two substituents $X^4$ can optionally form in collaboration a neutral conjugate diene having 4 to 30 carbon atoms or a divalent group.

In the formula 9, $Y^2$ represents -O-, -S-, -NR*-, or - PR*- wherein R* represents a hydrogen atom, a hydrocarbon group having 1 to 12 carbon atoms, a hydrocarbyloxy group having 1 to 8 carbon atoms, a silyl group, an alkyl halide group having 1 to 8 carbon atoms, an aryl halide group having 6 to 20 carbon atoms, or a combination thereof.

In the formula 9, $Z^2$ represents $SiR^*_2$, $CR^*_2$, $SiR^*_2SiR^*_2$, $CR^*_2CR^*_2$, $CR^*=CR^*$, $CR^*_2SiR^*_2$, or $GeR^*_2$ wherein R* is as defined above, n is 1, 2, or 3.

Examples of the transition metal compound having a cyclic η-binding anionic ligand used in the present embodiment include compounds as shown below. Specific examples of the zirconium compounds include, but are not particularly limited to, bis(methylcyclopentadienyl)zirconium dimethyl, bis(n-butylcyclopentadienyl)zirconium dimethyl, bis(indenyl)zirconium dimethyl, bis(1,3-dimethylcyclopentadienyl)zirconium dimethyl, (pentamethylcyclopentadienyl)(cyclopentadienyl)zirconium dimethyl, bis(cyclopentadienyl)zirconium dimethyl, bis(pentamethylcyclopentadienyl)zirconium dimethyl, bis(fluorenyl)zirconium dimethyl, ethylenebis(indenyl)zirconium dimethyl, ethylenebis(4,5,6,7-tetrahydro-1-indenyl) zirconium dimethyl, ethylenebis(4-methyl-1-indenyl)zirconium dimethyl, ethylenebis(5-methyl-1-indenyl)zirconium dimethyl, ethylenebis(6-methyl-1-indenyl)zirconium dimethyl, ethylenebis(7-methyl-1-indenyl)zirconium dimethyl, ethylenebis(5-methoxy-1-indenyl)zirconium dimethyl, ethylenebis(2,3-dimethyl-1-indenyl)zirconium dimethyl, ethylenebis(4,7-dimethyl-1-indenyl)zirconium dimethyl, ethylenebis-(4,7-dimethoxy-1-indenyl)zirconium dimethyl, methylenebis(cyclopentadienyl)zirconium dimethyl, isopropylidene(cyclopentadienyl)zirconium dimethyl, isopropylidene(cyclopentadienyl-fluorenyl)zirconium dimethyl, silylenebis(cyclopentadienyl)zirconium dimethyl, and dimethylsilylene(cyclopentadienyl)zirconium dimethyl.

Specific examples of the titanium compounds include, but are not particularly limited to, [(N-t-butylamido)(tetramethyl-$\eta^5$-cyclopentadienyl)-1,2-ethanediyl]titanium dimethyl, [(N-t-butylamido)(tetramethyl-$\eta^5$-cyclopentadienyl)dimethylsilane]titanium dimethyl, [(N-methylamido)(tetramethyl-$\eta^5$-cyclopentadienyl)dimethylsilane]titanium dimethyl, [(N-phenylamido) (tetramethyl-$\eta^5$-cyclopentadienyl)dimethylsilane]titanium dimethyl, [(N-benzylamido) (tetramethyl-$\eta^5$-cyclopentadienyl)dimethylsilane]titanium dimethyl, [(N-t-butylamido) ($\eta^5$-cyclopentadienyl)-1,2-ethanediyl]titanium dimethyl, [(N-t-butylamido) ($\eta^5$-cyclopentadienyl)dimethylsilane]titanium dimethyl, [(N-methylamido) ($\eta^5$-cyclopen-

tadienyl)-1,2-ethanediyl]titanium dimethyl, [(N-methylamido) ($\eta^5$-cyclopentadienyl)dimethylsilane]titanium dimethyl, [(N-t-butylamido)($\eta^5$-indenyl)dimethylsilane]titanium dimethyl, and [(N-benzylamido)($\eta^5$-indenyl)dimethylsilane]titanium dimethyl.

Specific examples of the nickel compounds include, but are not particularly limited to, dibromobistriphenylphosphine nickel, dichlorobistriphenylphosphine nickel, dibromodiacetonitrile nickel, dibromodibenzonitrile nickel, dibromo(1,2-bisdiphenylphosphinoethane)nickel, dibromo(1,3-bisdiphenylphosphinopropane)nickel, dibromo (1, 1 '-diphenylbisphosphinoferrocene) nickel, dimethylbisdiphenylphosphine nickel, dimethyl(1,2-bisdiphenylphosphinoethane)nickel, methyl(1,2-bisdiphenylphosphinoethane)nickel tetrafluoroborate, (2-diphenylphosphino-1-phenylethyleneoxy)phenylpyridine nickel, dichlorobistriphenylphosphine palladium, dichlorodibenzonitrile palladium, dichlorodiacetonitrile palladium, dichloro(1,2-bisdiphenylphosphinoethane) palladium, bistriphenylphosphine palladium bistetrafluoroborate, and bis(2,2'-bipyridine)methyl iron tetrafluoroborate etherate.

Specific examples of the hafnium compounds include, but are not particularly limited to, [(N-t-butylamido)(tetramethyl-η5-cyclopentadienyl)-1,2-ethanediyl]hafnium dimethyl, [(N-t-butylamido)(tetramethyl-η5-cyclopentadienyl)dimethylsilane]hafnium dimethyl, [(N-methylamido)(tetramethyl-η5-cyclopentadienyl)dimethylsilane]hafnium dimethyl, [(N-phenylamido)(tetramethyl-η5-cyclopentadienyl)dimethylsilane]hafnium dimethyl, [(N-benzylamido)(tetramethyl-η5-cyclopentadienyl)dimethylsilane]hafnium dimethyl, [(N-t-butylamido)(η5-cyclopentadienyl)-1,2-ethanediyl]hafnium dimethyl, [(N-t-butylamido)(η5-cyclopentadienyl)dimethylsilane]hafnium dimethyl, [(N-methylamido)(η5-cyclopentadienyl)-1,2-ethanediyl]hafnium dimethyl, [(N-methylamido)(η5-cyclopentadienyl)dimethylsilane]hafnium dimethyl, [(N-t-butylamido)(η5-indenyl)dimethylsilane]hafnium dimethyl, and [(N-benzylamido)(η5-indenyl)dimethylsilane]hafnium dimethyl.

Specific examples of the transition metal compound having a cyclic η-binding anionic ligand used in the present embodiment further include compounds named by the replacement of the moiety "dimethyl" (which appears at the end of the name of each compound, i.e., immediately after the moiety "zirconium" or "titanium", and corresponds to the moiety of $X^4$ in the formula 2) in the name of each zirconium compound or titanium compound listed above with, for example, any of "dichloro", "dibromo", "diiodo", "diethyl", "dibutyl", "diphenyl", "dibenzyl", "2-(N,N-dimethylamino)benzyl", "2-butene-1,4-diyl", "s-trans-η4-1,4-diphenyl-1,3-butadiene", "s-trans-$\eta^4$-3-methyl-1,3-pentadiene", "s-trans-$\eta^4$-1,4-dibenzyl-1,3-butadiene", "s-trans-$\eta^4$-2,4-hexadiene", "s-trans-$\eta^4$-1,3-pentadiene", "s-trans-$\eta^4$-1,4-ditolyl-1,3-butadiene", "s-trans-$\eta^4$-1,4-bis(trimethylsilyl)-1,3-butadiene", "s-cis-$\eta^4$-1,4-diphenyl-1,3-butadiene", "s-cis-$\eta^4$-3-methyl-1,3-pentadiene", "s-cis-$\eta^4$-1,4-dibenzyl-1,3-butadiene", "s-cis-$\eta^4$-2,4-hexadiene", "s-cis-$\eta^4$-1,3-pentadiene", "s-cis-$\eta^4$-1,4-ditolyl-1,3-butadiene", and "s-cis-$\eta^4$-1,4-bis(trimethylsilyl)-1,3-butadiene".

The transition metal compound having a cyclic η-binding anionic ligand used in the present embodiment can be synthesized by a method generally known in the art. In the present embodiment, these transition metal compounds may be used singly or in combination.

Next, the activating agent b) capable of forming a complex that exerts catalytic activity through reaction with the transition metal compound (hereinafter, also simply referred to as an "activating agent") used in the present embodiment will be described.

Examples of the activating agent for use in the present embodiment include compounds represented by the following formula 10:

$$[L^2\text{-}H]^{d+}[M^5{}_mQ_p]^{d-} \ldots \qquad \text{Formula 10}$$

wherein $[L^2\text{-}H]^{d+}$ represents a proton-donating Bronsted acid wherein $L^2$ represents a neutral Lewis base, and d represents an integer of 1 to 7; and $[M^5{}_mQ_p]^{d-}$ represents a compatible non-coordinating anion wherein $M^5$ represents a metal belonging to any of groups 5 to 15 of the periodic system, or a metalloid, each Q is independently selected from the group consisting of hydrides, halides, dihydrocarbylamide groups having 2 to 20 carbon atoms, hydrocarbyloxy groups having 1 to 30 carbon atoms, hydrocarbon groups having 1 to 30 carbon atoms, and substituted hydrocarbon groups having 1 to 40 carbon atoms wherein the number of the halide represented by Q is 1 or less, m represents an integer of 1 to 7, p represents an integer of 2 to 14, and d is as defined above provided that p - m = d.

Specific examples of the non-coordinating anion include, but are not particularly limited to, tetrakisphenyl borate, tri(p-tolyl)(phenyl) borate, tris(pentafluorophenyl)(phenyl) borate, tris(2,4-dimethylphenyl)(hydroxyphenyl) borate, tris(3,5-dimethylphenyl)(phenyl) borate, tris(3,5-ditrifluoromethylphenyl)(phenyl) borate, tris(pentafluorophenyl)(cyclohexyl) borate, tris(pentafluorophenyl)(naphthyl) borate, tetrakis(pentafluorophenyl) borate, triphenyl(hydroxyphenyl) borate, diphenyl-di(hydroxyphenyl) borate, triphenyl(2,4-dihydroxyphenyl) borate, tri(p-tolyl)(hydroxyphenyl) borate, tris(pentafluorophenyl)(hydroxyphenyl) borate, tris(2,4-dimethylphenyl)(hydroxyphenyl) borate, tris(3,5-dimethylphenyl)(hydroxyphenyl) borate, tris(3,5-di-trifluoromethylphenyl)(hydroxyphenyl) borate, tris(pentafluorophenyl)(2-hydroxyethyl) borate, tris(pentafluorophenyl)(4-hydroxybutyl) borate, tris(pentafluorophenyl)(4-hydroxy-cyclohexyl) borate, tris(pentafluorophenyl)(4-(4'-hydroxyphenyl)phenyl) borate, and tris(pentafluorophenyl)(6-hydroxy-2-naphthyl) borate.

Other preferred examples of the non-coordinating anion include borates derived from the borates listed above

by the replacement of the hydroxy group with a NHR group wherein R is preferably a methyl group, an ethyl group, or a tert-butyl group.

Specific examples of the proton-donating Bronsted acid include, but are not particularly limited to: trialkyl group-substituted ammonium cations such as triethylammonium, tripropylammonium, tri(n-butyl)ammonium, trimethylammonium, tributylammonium, and tri(n-octyl)ammonium; N,N-dialkylanilinium cations such as N,N-dimethylanilinium, N,N-diethylanilinium, N,N-2,4,6-pentamethylanilinium, and N,N-dimethylbenzylanilinium; dialkylammonium cations such as di-(i-propyl)ammonium and dicyclohexylammonium; triarylphosphonium cations such as triphenylphosphonium, tri(methylphenyl)phosphonium, and tri(dimethylphenyl)phosphonium; and dimethylsulfonium, diethylsulfonium, and diphenylsulfonium.

In the present embodiment, an organic metal oxy compound having unit represented by the following formula 11 may be used as the activating agent:

$$-\!\left(M^6R^{14}{}_{n-2}-O\right)_m\!- \quad \cdots \text{ Formula 11}$$

wherein $M^6$ represents a metal belonging to any of groups 13 to 15 of the periodic system, or a metalloid, each $R^{14}$ independently represents a hydrocarbon group having 1 to 12 carbon atoms or a substituted hydrocarbon group, n represents the valence of the metal $M^6$, and m represents an integer of 2 or larger.

As a preferred example, the activating agent for use in the present embodiment is, for example, an organic aluminum oxy compound comprising a unit represented by the following formula 12:

$$-\!\left(AlR^{15}-O\right)_m\!- \quad \cdots \text{ Formula 12}$$

wherein $R^{15}$ represents an alkyl group having 1 to 8 carbon atoms, and m represents an integer of 2 to 60.

As a more preferred example, the activating agent for use in the present embodiment is, for example, a methylalumoxane comprising a unit represented by the following formula 13:

$$-\!\left(Al(CH_3)-O\right)_m\!- \quad \cdots \text{ Formula 13}$$

wherein m is an integer of 2 to 60.

In the present embodiment, these activating agent components may be used singly or in combination.

In the present embodiment, such a catalytic component may be used as a supported catalyst in which the component is supported by a solid component. Such a solid component is not particularly limited and is specifically, for example, at least one inorganic solid material selected from: porous polymer materials such as polyethylene, polypropylene, and styrene-divinylbenzene copolymers; inorganic solid materials having an element belonging to any of groups 2, 3, 4, 13, and 14 of the periodic system, such as silica, alumina, magnesia, magnesium chloride, zirconia, titania, boron oxide, calcium oxide, zinc oxide, barium oxide, vanadium pentaoxide, chromium oxide, and thorium oxide, and mixtures thereof; and complex oxides thereof.

Specific examples of the complex oxides of silica include, but are not particularly limited to, complex oxides of silica and an element of group 2 or 13 of the periodic system, such as silica-magnesia and silica-alumina. In the present embodiment, in addition to the two catalytic components mentioned above, an organic aluminum compound can be used, if necessary, as a catalytic component. The organic aluminum compound that can be used in the present embodiment is, for example, a compound represented by the following formula 14:

$AlR^{16}{}_nX^5{}_{3-n}$ · · · Formula 14

wherein $R^{16}$ represents an alkyl group having 1 to 12 carbon atoms or an aryl group having 6 to 20 carbon atoms, $X^5$ represents halogen, hydrogen, or an alkoxyl group, wherein the alkyl group is linear, branched, or cyclic, and n represents an integer of 1 to 3.

In this context, the organic aluminum compound may be a mixture of compounds represented by the formula 14. In the organic aluminum compound that can be used in the present embodiment, examples of $R^{16}$ in the formula include a methyl group, an ethyl group, a butyl group, an isobutyl group, a hexyl group, an octyl group, a decyl group, a phenyl group, and a tolyl group. Examples of $X^5$ in the formula include a methoxy group, an ethoxy group, a butoxy group, and chloro.

Specific examples of the organic aluminum compound that can be used in the present embodiment include, but are not particularly limited to, trimethyl aluminum, triethyl aluminum, tributyl aluminum, triisobutyl aluminum, trihexyl aluminum, trioctyl aluminum, and tridecyl aluminum. Alternative examples of the organic aluminum compound that can be used in the present embodiment include reaction products of these organic aluminums and alcohols such as methyl alcohol, ethyl alcohol, butyl alcohol, pentyl alcohol, hexyl alcohol, octyl alcohol, and decyl alcohol, for example, dimethyl methoxy aluminum, dimethyl ethoxy aluminum, and dibutyl butoxy aluminum.

(Polymerization conditions)

In the method for producing the ultrahigh-molecular-weight polyethylene powder of the present embodiment, the polymerization temperature is usually 30°C or higher and 100°C or lower. The polymerization temperature equal to or higher than 30°C tends to realize efficient industrial production. On the other hand, the polymerization temperature equal to or lower than 100°C tends to realize continuous stable operation. The intrinsic viscosity IV of the ultrahigh-molecular-weight polyethylene powder tends to be lower as the polymerization temperature is higher, and tends to be higher as the polymerization temperature is lower.

In the method for producing the ultrahigh-molecular-weight polyethylene powder of the present embodiment, the polymerization pressure is usually atmospheric pressure or higher and 2 MPa or lower. The polymerization pressure is preferably 0.1 MPa or higher, more preferably 0.12 MPa or higher and preferably 1.5 MPa or lower, more preferably 1.0 MPa or lower. The polymerization pressure equal to or higher than atmospheric pressure tends to realize efficient industrial production. The polymerization pressure equal to or lower than 2 MPa tends to be able to suppress partial heat generation ascribable to rapid polymerization reaction during the introduction of a catalyst, and realize stable production of the polyethylene.

The polymerization reaction can be carried out by any of batch, semicontinuous, and continuous methods. A batch method is preferred from the viewpoint of controlling s to the range mentioned above. On the other hand, a continuous method is preferred from the viewpoint of rendering the inside of the polymerization system more uniform. A partial high-temperature state ascribable to rapid ethylene reaction can be suppressed by continuously supplying ethylene gas, a solvent, a catalyst, etc., into the polymerization system while continuously discharging them together with produced polyethylene. Thus, the polymerization system is further stabilized. Ethylene reaction in a homogeneous state in the system prevents the formation of branches and/or double bonds or the like in polymer chains and is less likely to cause reduction in molecular weight and/or cross-linking of the polyethylene. The resulting ultrahigh-molecular-weight polyethylene powder decreases unmelted matter remaining when melted or dissolved, is prevented from being colored, and is less likely to present problems such as reduced mechanical properties.

Alternatively, the polymerization may be carried out at two or more stages differing in reaction conditions. The intrinsic viscosity of the resulting polyethylene can also be adjusted by the presence of hydrogen in the polymerization system or by the change of the polymerization temperature, as described in, for example, the specification of West German Patent Application Publication No. 3127133. The addition of hydrogen as a chain transfer agent into the polymerization system can control the intrinsic viscosity within a proper range. The addition of the chain transfer agent tends to decrease the intrinsic viscosity IV of the ultrahigh-molecular-weight polyethylene to be produced even at the same polymerization temperature. In the case of adding hydrogen into the polymerization system, the mole fraction of the hydrogen is preferably 0 mol% or more and 30 mol% or less, more preferably 0 mol% or more and 25 mol% or less, further preferably 0 mol% or more and 20 mol% or less. In the present embodiment, in addition to each component as mentioned above, other components known in the art to be useful in production of the polyethylene can be included.

The average value of the swelling onset temperatures of the ultrahigh-molecular-weight polyethylene powders having particle sizes of $D_{10}$, $D_{50}$, and $D_{90}$ can be controlled to the range mentioned above, as mentioned above, by (1) a method of: in producing an ethylene polymer, mixing a very small amount of a comonomer into ethylene, and performing polymerization; and drying a polymer powder at 100°C or higher, and (2) a method of: performing polymerization in a state of a polymerization solvent supplemented with a plasticizer, removing the plasticizer from the powder after the completion of polymerization, setting catalytic activity (weight of polyethylene obtained per catalyst having a unit weight)

during polymerization to 5000 (g-PE/g-catalyst) or less, and drying the polymer powder at 70°C or lower.

In the case of producing an ethylene polymer by the method (1), the comonomer is preferably of 0.01 to 0.05 mol% in terms of a gas phase concentration.

In the case of producing an ethylene polymer by the method (2), the amount of the plasticizer added to the polymerization solvent is preferably 30 to 50% by mass, more preferably 35 to 45% by mass.

In the case of producing an ethylene polymer by the method (1), the drying temperature of the polymer powder is preferably 100°C or higher, more preferably 105°C or higher.

In the case of producing an ethylene polymer by the method (2), the drying temperature of the polymer powder is preferably 70°C or lower, more preferably 65°C or lower.

In the case of producing an ethylene polymer by the method (2), the catalytic activity during polymerization is preferably 5000 (g-PE/g-catalyst) or less, more preferably 4000 (g-PE/g-catalyst) or less.

For the polymerization for the ultrahigh-molecular-weight polyethylene powder of the present embodiment, an antistatic agent such as Stadis 450 manufactured by The Associated Octel Company Ltd. (agent: Maruwa Bussan K.K.) may be used for suppressing the adherence of polymers to a polymerization reactor. Stadis 450 may be diluted with an inert hydrocarbon vehicle and then added to the polymerization reactor through a pump or the like. The amount of this dilution added is preferably in the range of 0.10 ppm or higher and 20 ppm or lower, more preferably in the range of 0.20 ppm or higher and 10 ppm or lower, based on the amount of the polyethylene produced per unit time.

[Additive]

The ultrahigh-molecular-weight polyethylene powder of the present embodiment can be supplemented, if necessary, with an additive such as a slip agent, a neutralizer, an antioxidant, a light stabilizer, an antistatic agent, or a pigment.

Examples of the slip agent or the neutralizer include, but are not particularly limited to, aliphatic hydrocarbons, higher fatty acids, higher fatty acid metal salts, fatty acid esters of alcohols, waxes, higher fatty acid amides, silicone oil, and rosin. Specific examples thereof include, but are not particularly limited to, calcium stearate. The content of the slip agent or the neutralizer is not particularly limited and is preferably 5000 ppm or lower, more preferably 4000 ppm or lower, further preferably 3000 ppm or lower.

The antioxidant is not particularly limited and is preferably, for example, a phenol compound or a phenol-phosphorus compound, specifically include: phenol antioxidants such as 2,6-di-t-butyl-4-methylphenol(dibutylhydroxytoluene), n-octadecyl-3-(4-hydroxy-3,5-di-t-butylphenyl)propionate, and tetrakis(methylene(3,5-di-t-butyl-4-hydroxyhydrocinnamate))methane; phenol-phosphorus antioxidants such as 6-[3-(3-t-butyl-4-hydroxy-5-methylphenyl)propoxy]-2,4,8,10-tetra-t-butyldibenzo[d,f][1,3,2]dioxaphosphepin; and phosphorus antioxidants such as tetrakis(2,4-di-t-butylphenyl)-4,4'-biphenylene-di-phosphonite, tris(2,4-di-t-butylphenyl) phosphite, and cyclic neopentane tetraylbis(2,4-t-butylphenyl phosphite).

In the ultrahigh-molecular-weight polyethylene powder according to the present embodiment, the amount of the antioxidant is preferably 5 parts by mass or lower, more preferably 4 parts by mass or lower, further preferably 3 parts by mass or lower, particularly preferably 2 parts by mass or lower, per 100 parts by mass in total of the ultrahigh-molecular-weight polyethylene powder and the plasticizer. The ultrahigh-molecular-weight polyethylene powder containing 5 parts by mass or lower of the antioxidant is less susceptible to embrittlement and/or discoloration, reduction in mechanical properties, etc., because of the suppressed degradation thereof, resulting in better long-term stability.

Examples of the light stabilizer include, but are not particularly limited to: benzotriazole light stabilizers such as 2-(5-methyl-2-hydroxyphenyl)benzotriazole and 2-(3-t-butyl-5-methyl-2-hydroxyphenyl)-5-chlorobenzotriazole; and hindered amine light stabilizers such as bis(2,2,6,6-tetramethyl-4-piperidine)sebacate and poly[{6-(1,1,3,3-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino}]. The content of the light stabilizer is not particularly limited and is 5000 ppm or lower, preferably 3000 ppm or lower, more preferably 2000 ppm or lower.

Examples of the antistatic agent include, but are not particularly limited to, aluminosilicate, kaolin, clay, natural silica, synthetic silica, silicates, talc, diatomaceous earth, and glycerin fatty acid ester.

[Molded article]

The ultrahigh-molecular-weight polyethylene powder of the present embodiment can be processed by various methods. The shaped article of the present embodiment is obtained by shaping the ultrahigh-molecular-weight polyethylene powder mentioned above. The shaped article of the present embodiment can be employed in various uses. Specific examples of the shaped article of the present embodiment include, but are not limited to, separators for secondary batteries (e.g., microporous membranes) and fibers (e.g., high-strength fibers). Among others, the shaped article is suitable as a microporous membrane for a lithium ion secondary battery separator or a high-strength fiber.

Examples of the method for producing the separator for secondary battery (e.g., microporous membrane)

include, but are not particularly limited to, a processing method based on a wet process using a solvent, which involves extrusion in an extruder equipped with a T die, drawing, extraction, and drying. Specific examples thereof include, but are not particularly limited to, a production method under the following general swelling conditions and a production method under low-temperature swelling conditions.

(General swelling conditions)

The ultrahigh-molecular-weight polyethylene powder, liquid paraffin, and optionally an additive such as an antioxidant are blended and stirred at a temperature lower by 30°C than the melting point ($T_{m2}$) of the ultrahigh-molecular-weight polyethylene powder to prepare a liquid in a slurry form.

The obtained liquid in a slurry form is charged into a kneader, kneaded at a given temperature, then thermally pressed, and subsequently pressed by cooling to form a gel sheet. The thickness of the gel sheet is adjusted using a metal frame.

This sheet in a gel form is drawn using a simultaneous biaxial drawing machine. Then, the drawn film is cut out and fixed to a metal frame. Then, the resultant is dipped in hexane for the extraction and removal of liquid paraffin, and then dried. The film can be further heat-set to obtain a microporous membrane for a secondary battery separator.

(Low-temperature swelling conditions)

A microporous membrane for a secondary battery separator can be obtained in the same manner as in (General swelling conditions) described above except that the conditions for impregnating a powder with liquid paraffin beforehand are changed to a temperature lower by 50°C than the melting point (Tm2) of the ultrahigh-molecular-weight polyethylene powder.

Examples of the method for producing the fiber (e.g., high-strength fiber) include, but are not particularly limited to, a method of kneading and spinning liquid paraffin and the ultrahigh-molecular-weight polyethylene powder mentioned above, followed by heating and drawing to obtain a fiber. Specific examples thereof include, but are not particularly limited to, a production method under the following general swelling conditions and a production method under low-temperature swelling conditions.

(General swelling conditions)

The ultrahigh-molecular-weight polyethylene powder, liquid paraffin, and optionally an additive such as an antioxidant are blended and stirred at a temperature lower by 30°C than the melting point ($T_{m2}$) of the ultrahigh-molecular-weight polyethylene powder to prepare a liquid in a slurry form.

Next, the liquid in a slurry form is charged into a kneader, and kneading operation is performed at a given temperature.

Then, spinning is performed through a spinneret attached to the tip of an extruder.

In this respect, a discharged thread containing liquid paraffin is wound at a location distant from the spinneret.

Subsequently, in order to remove liquid paraffin from the wound thread, the thread is dipped in hexane for extraction operation and then dried.

The obtained thread can be primarily drawn in a thermostat bath and subsequently secondarily drawn in a thermostat bath immediately before being broken to obtain a high-strength fiber (drawn thread).

(Low-temperature swelling conditions)

A high-strength fiber can be obtained in the same manner as in (General swelling conditions) described above except that the conditions for impregnating a powder with liquid paraffin beforehand are changed to a temperature lower by 50°C than the melting point (Tm2) of the ultrahigh-molecular-weight polyethylene powder.

Examples

Hereinafter, the present invention will be described more specifically with reference to Examples and Comparative Examples. However, the present invention is not intended to be limited by Examples below by any means. In Examples given below, procedures were performed at room temperature unless otherwise specified.

In the present application, ethylene and hexane used in Examples and Comparative Examples were dehydrated using MS-3A (manufactured by UNION SHOWA K.K.). The hexane was used after being further deoxidated by deaeration under reduced pressure using a vacuum pump.

[Methods and conditions for measuring]

The physical properties of ultrahigh-molecular-weight polyethylene powders of Examples and Comparative Examples were measured by the following methods.

(1) Intrinsic viscosity IV

The intrinsic viscosity IV of each ultrahigh-molecular-weight polyethylene powder obtained in Examples and Comparative Examples was measured as follows in accordance with ISO1628-3 (2010).

The polyethylene powder was weighed in the range of 4.0 to 4.5 mg and dissolved by stirring at 150°C for 90 minutes in a dissolution tube, the air inside which was evacuated with a vacuum pump and purged with nitrogen, using 20 mL of decahydronaphthalene (supplemented with 1 g/L 2,6-di-t-butyl-4-methylphenol; hereinafter, referred to as decalin) deaerated with a vacuum pump and purged with nitrogen as a solvent to obtain a solution. The viscometer used was a Cannon-Fenske viscometer (manufactured by Sibata Scientific Technology Ltd.: product No. -100).

(2) Method for measuring $D_{10}$, $D_{50}$, and $D_{90}$

Particle sizes of each ultrahigh-molecular-weight polyethylene powder obtained in Examples and Comparative Examples were measured using a laser particle size distribution analyzer (SALD-2100 manufactured by Shimadzu Corp.) with methanol as a dispersion medium. A cumulative particle size distribution from smaller particle sizes was prepared on the basis of the measurement. Particle sizes that attained cumulative percentages of 10%, 50%, and 90% were defined as $D_{10}$, $D_{50}$, and $D_{90}$, respectively.

(3) Method for measuring swelling onset temperatures $T_{10}$, $T_{50}$, and $T_{90}$ and method for calculating average value $T_s$ thereof

Swelling onset temperature $T_{10}$ of a powder having a particle size of $D_{10}$ was determined. First, any one particle of an ultrahigh-molecular-weight polyethylene powder having a major axis size and a minor axis size (a plane figure of a particle observed under an optical microscope was subjected to image processing, a distance between parallel lines having the shortest interval was defined as the minor axis size of the particle, and a distance between parallel lines having the longest interval in a direction perpendicular thereto was defined as the major axis size of the particle) within a range of $D_{10} \pm 10\%$ was collected while confirming with an optical microscope. The collected one particle of the ultrahigh-molecular-weight polyethylene powder (hereinafter, also referred to as a "measurement particle") was loaded onto a glass slide, and 0.05 mL of liquid paraffin (P-350P manufactured by MORESCO Corp.) was dropped to the measurement particle using a 1 mL syringe. Then, a glass cover was placed thereon so as to sandwich the measurement particle. Then, the glass slide was loaded onto a heat stage (10083L manufactured by Japan High Tech Co., Ltd.) and heated from room temperature to 150°C under heating conditions given below. The appearance of the measurement particle during heating was photographed every 6 seconds under an optical microscope (BX51N manufactured by Olympus Corp.) equipped with a camera. An equivalent circle diameter of the measurement particle was calculated by image processing from each of the obtained observation images. The lowest temperature at which the equivalent circle diameter of the measurement particle was increased by 1% or more with respect to the equivalent circle diameter of the measurement particle at 80°C in a temperature range of 80°C or higher and 150°C or lower was defined as the swelling onset temperature of the measurement particle. Measurement was performed for n = 10, and an average value thereof was defined as the swelling onset temperature $T_{10}$.

Next, swelling onset temperature $T_{50}$ of an ultrahigh-molecular-weight polyethylene powder having a particle size of $D_{50}$, and swelling onset temperature $T_{90}$ of an ultrahigh-molecular-weight polyethylene powder having a particle size of $D_{90}$ were also determined in the same manner as in the swelling onset temperature $T_{10}$ using respectively an ultrahigh-molecular-weight polyethylene powder having a major axis size and a minor axis size within a range of $D_{50} \pm 10\%$, and an ultrahigh-molecular-weight polyethylene powder having a major axis size and a minor axis size within a range of $D_{90} \pm 10\%$.

Finally, average value $T_s$ of the swelling onset temperatures $T_{10}$, $T_{50}$, and $T_{90}$ was determined as follows:

$$T_S = \frac{T_{10}+T_{50}+T_{90}}{3}$$

(Heating conditions)

Heating rate from room temperature to 35°C: 5°C/min
Heating rate in a range from 35°C to 80°C: 8°C/min
Heating rate in a range from 80°C to 150°C: 5°C/min

Standard deviation s of the swelling onset temperatures of the ultrahigh-molecular-weight polyethylene powders having particle sizes of $D_{10}$, $D_{50}$, and $D_{90}$ was determined as follows.

$$s = \sqrt{\frac{(T_S - T_{10})^2 + (T_S - T_{50})^2 + (T_S - T_{90})^2}{3}}$$

(4) Ti, Al and Si content in ultrahigh-molecular-weight polyethylene powder

Each ultrahigh-molecular-weight polyethylene powder obtained in Examples and Comparative Examples was pressure-decomposed using a microwave decomposition apparatus (model ETHOS TC, manufactured by Milestone General K.K.). The element concentrations of the metal titanium (Ti), aluminum (Al), and silicate (Si) contained in the ultrahigh-molecular-weight polyethylene powder were measured by the internal standard method using ICP-MS (inductively coupled plasma-mass spectrometer, model X Series X7, manufactured by Thermo Fisher Scientific K.K.) .

(5) Method for producing microporous membrane for secondary battery separator (general swelling conditions)

A microporous membrane for a secondary battery separator was produced as follows using each ultrahigh-molecular-weight polyethylene powder obtained in Examples and Comparative Examples.

30 parts by mass of the ultrahigh-molecular-weight polyethylene powder, 70 parts by mass of liquid paraffin (liquid paraffin (product name: Smoil P-350P) manufactured by MORESCO Corp.), and 1 part by mass of an antioxidant (tetrakis[methylene(3,5-di-t-butyl-4-hydroxyhydrocinnamate)]methane (product name: ANOX20) manufactured by Great Lakes Chemical Japan) were added per 100 parts by mass in total of the ultrahigh-molecular-weight polyethylene powder and the liquid paraffin, and stirred at a temperature lower by 30°C than the melting point ($T_{m2}$) of the ultrahigh-molecular-weight polyethylene powder for 30 minutes to prepare a liquid in a slurry form.

The obtained liquid in a slurry form was charged into Labo Plastomill (unit model: 4C150-01) manufactured by Toyo Seiki Seisaku-sho, Ltd., kneaded at a screw rotational speed of 50 rpm at a constant temperature of 200°C for 10 minutes, then thermally pressed under conditions of 180°C/1 MPa/3 minutes, further thermally pressed under conditions of 180°C/10 MPa/2 minutes, and then pressed by cooling under conditions of 25°C/10 MPa/5 minutes to form a gel sheet. The thickness of the gel sheet was adjusted to 1.0 mm using a metal frame, which is 20 cm square and have a thickness of 1.0 mm.

This sheet in a gel form was cut into 9.5 cm square and drawn at 115°C at a ratio of 7 × 7 using a simultaneous biaxial drawing machine. Then, this drawn film was cut into 30 cm square and fixed to a metal frame having an inside dimension of 25 cm. Then, the resultant was dipped in hexane for the extraction and removal of liquid paraffin, and then dried at room temperature for 24 hours. The film was further heat-set at 134°C for 1 minute to obtain a microporous membrane for a secondary battery separator.

(6) Method for producing microporous membrane for secondary battery separator (low-temperature swelling conditions)

A microporous membrane for a secondary battery separator was obtained in the same manner as in the section (5) except that the conditions for impregnating a powder with liquid paraffin beforehand were changed to stirring at a temperature lower by 50°C than the melting point (Tm2) of the ultrahigh-molecular-weight polyethylene powder for 30 minutes.

(7) The number of defects in microporous membrane for secondary battery separator

Each microporous membrane for a secondary battery separator was produced by the method described in the section (5) or (6), and 50 μm or larger defects present in 1 $m^2$ of the obtained microporous membrane (16 microporous membranes of 25 cm square) were counted visually or, if necessary, through a magnifying glass. In this context, the "defects" refer to portions with darker color (poor dispersion) than that of normal portions when the microporous membranes are observed with transmitted light, and neither fibers nor colored foreign matter is counted as defects. The number of defects, one of the indexes for the quality of the microporous membrane, was evaluated according to the evaluation criteria given below on the basis of the obtained number of defects.

(Evaluation criteria)

◎ (excellent): less than 15 defects/$m^2$
○ (good): 15 or more defects/$m^2$ and less than 45 defects/$m^2$
△ (fair): 45 or more defects/$m^2$ and less than 90 defects/$m^2$
× (poor): 90 or more defects/$m^2$

(8) Thickness variations of microporous membrane for secondary battery separator

Each microporous membrane for a secondary battery separator was produced by the method described in the section (5) or (6), and the thickness of the obtained microporous membrane was measured using a film thickness gauge based on JIS K 7130. For measurement locations, one microporous membrane of 25 cm square was cut into 25 microporous membranes of 5 cm square. Their respective central parts were measured, and an average film thickness was calculated. Thickness variations (uneven film thickness), one of the indexes for the quality of the microporous membrane, were evaluated as given below on the basis of the average film thickness.

(Evaluation criteria)

◎ (excellent): variations of less than ±1.5 μm from the average film thickness.
○ (good): variations of ±1.5 μm or more and less than 2.0 μm from the average film thickness.
△ (fair): variations of ±2.0 μm or more and less than 4.0 μm from the average film thickness.
× (poor): variations of ±4.0 μm or more from the average film thickness.

(9) (Basis weight-based puncture strength (gf/(g/$m^2$)) of microporous membrane for secondary battery separator

Each microporous membrane for a secondary battery separator described above in the section (5) or (6) was fixed to a sample holder having an opening of 10 mm in diameter using Handy Compression Tester "KES-G5" manufactured by Kato Tech Co., Ltd. Next, a central part of the fixed microporous membrane was subjected to a puncture test under conditions involving a radius of curvature of 0.5 mm at the tip of a needle and a puncture rate of 10 mm/min to obtain a puncture strength (gf) as a maximum puncture load. The obtained puncture strength (gf) was divided by a basis weight (g/$m^2$) to calculate basis weight-based puncture strength (gf/(g/$m^2$)). This operation was carried out 8 times using eight microporous membranes, and an average value from the eight measurements was regarded as basis weight-based puncture strength (gf/(g/$m^2$)) and evaluated according to the criteria given below.

(Evaluation criteria)

◎ (excellent): 80 gf/(g/$m^2$) or more
○ (good): 70 gf/(g/$m^2$) or more and less than 80 gf/(g/$m^2$)
△ (fair): 60 gf/(g/$m^2$) or more and less than 70 gf/(g/$m^2$)
× (poor): less than 60 gf/(g/$m^2$)

(10) Rate of thermal shrinkage of microporous membrane for secondary battery separator

The production of each microporous membrane for a secondary battery separator described in the section (5) or (6) was carried out under four heat setting conditions, 130°C/min, 132°C/min, 134°C/min, and 136°C/min, and the porosity of the obtained membrane thus heat-set was calculated. The porosity was determined by cutting a sample of 10 cm square out of the microporous membrane, determining its volume ($cm^3$) and mass (g), and calculating the porosity according to the following expression from the volume, the mass, and a polyethylene density ($g/cm^3$).

Porosity (%) = (Volume - Mass /Density) / Volume $\times$ 100

One obtained membrane thus heat-set was sandwiched between sheets, and the paper bundle was put in an envelope and heated at 120°C for 1 hour. Then, the resultant was cooled at room temperature for 15 minutes. The length of each side of the membrane was measured with a steel square, and an average value was determined. The rate of shrinkage from the original length (10 cm) was calculated to calculate the rate of thermal shrinkage. Here, a graph of the porosity against the rate of thermal shrinkage was prepared, and the rate of thermal shrinkage at a porosity of 50% was approximated. Superiority or inferiority in membrane physical properties was evaluated according to the following criteria on the basis of the obtained rate of thermal shrinkage.

(Evaluation criteria)

◎ (excellent): less than 20%
○ (good): 20% or more and less than 25%
△ (fair): 25% or more and less than 30%
× (poor): 30% or more

(11) Method for producing high-strength fiber (general swelling conditions)

A high-strength fiber was produced as follows using each ultrahigh-molecular-weight polyethylene powder. 7 parts by mass of the ultrahigh-molecular-weight polyethylene powder, 93 parts by mass of liquid paraffin (liquid paraffin (product name: Smoil P-350P) manufactured by MORESCO Corp.), and 1 part by mass of an antioxidant (tetrakis[methylene(3,5-di-t-butyl-4-hydroxyhydrocinnamate)]methane (product name: ANOX20) manufactured by Great Lakes Chemical Japan) were added per 100 parts by mass in total of the ultrahigh-molecular-weight polyethylene powder and the liquid paraffin, and stirred at a temperature lower by 30°C than the melting point (Tm2) of the ultrahigh-molecular-weight polyethylene powder for 30 minutes to prepare a liquid in a slurry form.
Next, the liquid in a slurry form was charged into a counter-rotating twin-screw extruder (unit model: 2D25S) for Labo Plastomill (unit model: 4C150) manufactured by Toyo Seiki Seisaku-sho, Ltd., and kneading operation was performed at a constant temperature of 200°C.
Then, spinning was performed through a spinneret attached to the tip of an extruder. The spinning was carried out under conditions involving a spinneret temperature of 200°C, a discharge rate of 300 g/hour, and a spinneret hole size of 1.0 mm.
Next, a discharged thread containing liquid paraffin was wound at a location distant by 2.0 m from the spinneret at a rate of 50 m/min under room temperature conditions.
Subsequently, in order to remove liquid paraffin from the wound thread, the thread was dipped in hexane for extraction operation and then dried for 24 hours.
The obtained thread was primarily drawn at a rate of 20 mm/min in a thermostat bath set to 120°C, and subsequently secondarily drawn a rate of 10 mm/min in a thermostat bath set to 140°C, immediately before being broken to obtain a high-strength fiber (drawn thread).

(12) Method for producing high-strength fiber (low-temperature swelling conditions)

A high-strength fiber (drawn thread) was obtained in the same manner as in the section (11) except that the conditions for impregnating a powder with liquid paraffin beforehand were changed to stirring at a temperature lower by 50°C than the melting point (Tm2) of the ultrahigh-molecular-weight polyethylene powder for 30 minutes.

(13) The number of thread lumps in high-strength fiber

How many thread lumps were generated was confirmed in 10 m of each high-strength fiber (drawn thread) obtained by spinning by the method described in the section (11) or (12) to calculate the number of thread lumps. In this context, the "thread lumps" refer to locally thicker portions (poor dispersion) than normal portions. The quality of the high-strength fiber was evaluated as follows on the basis of the calculated number of thread lumps.

(Evaluation criteria)

◎ (excellent): the number of thread lumps was less than 3/m.
○ (good): the number of thread lumps was 3 or more and less than 6/m.
△ (fair): the number of thread lumps was 6 or more and less than 10/m.
× (poor): the number of thread lumps was 10 or more/m.

(14) Uneven thread diameter of high-strength fiber

A thread diameter was measured at 0.5-m intervals under an optical microscope as to 10 m of each high-strength fiber (drawn thread) obtained by spinning by the methods described above in (11) or (12), and an average thread diameter was calculated. An uneven thread diameter, one of the indexes for the quality of the high-strength fiber, was evaluated as follows on the basis of the average thread diameter.

(Evaluation criteria)

◎ (excellent): variations of less than ±3 μm from the average thread diameter
○ (good): variations of ±3 μm or more and less than 5 μm from the average thread diameter △ (fair): variations of ±5 μm or more and less than 10 μm from the average thread diameter
× (poor): variations of ±10 μm or more from the average thread diameter

(15) Tensile breaking strength of high-strength fiber

10 m of each high-strength fiber (drawn thread) obtained by spinning by the method described in the section (11) or (12) was cut at 1-m intervals. Ten fibers thus obtained were pulled to the breaking limit under room temperature conditions, and average breaking strength was calculated. In this respect, the highest load value thus applied to the thread was divided by fineness to calculate breaking strength. In this context, the fineness is a weight (g) per $1 \times 10^4$ m of the thread and was determined from the weight of 10 m of the high-strength fiber. The unit of the fineness is represented by dtex. The weight measurement employed a balance capable of measurement on the scale of 0.1 mg.
The tensile breaking strength of the high-strength fiber was evaluated according to the following criteria.

(Evaluation criteria)

◎ (excellent): breaking strength of 30 cN/dtex or more

○ (good): breaking strength of 25 cN/dtex or more and less than 30 cN/dtex

△ (fair): breaking strength of 20 cN/dtex or more and less than 25 cN/dtex

× (poor): breaking strength of less than 20 cN/dtex

(16) Melting point ($T_{m2}$) of ultrahigh-molecular-weight polyethylene powder

The melting point ($T_{m2}$) of each ultrahigh-molecular-weight polyethylene powder obtained in Examples and Comparative Examples was measured as follows using DSC8000 manufactured by Perkin Elmer, Inc. as a differential

scanning calorimeter (DSC).

8.3 to 8.5 mg of the ultrahigh-molecular-weight polyethylene powder was weighed and placed in an aluminum sample pan. An aluminum cover was attached to this pan, which was then loaded in the differential scanning calorimeter. While the apparatus was purged with nitrogen at a flow rate of 20 mL/min, measurement was carried out under the conditions given below. A pure substance of indium was used in temperature correction.

1) Retaining the powder at 50°C for 1 minute, followed by heating to 180°C at a heating rate of 10°C/min.
2) Retaining the powder at 180°C for 5 minutes, followed by cooling to 50°C at a cooling rate of 10°C/min.
3) Retaining the powder at 50°C for 5 minutes, followed by heating to 180°C at a heating rate of 10°C/min.

The temperature of a peak top in a melting curve obtained in the process of heating in the step 3) was regarded as a melting point ($T_{m2}$).

[Method for synthesizing catalyst]

[Production Example 1]

(Preparation of supported metallocene catalytic component [A])

(1) Synthesis of raw material [a-1]

Spherical silica having an average particle size of 7 μm, a surface area of 700 $m^2$/g, and an intra-particle pore volume of 1.9 mL/g was fired at 500°C for 5 hours in the nitrogen atmosphere for dehydration.

In a 1.8 L autoclave, 40 g of this dehydrated silica was dispersed in 800 mL of hexane in the nitrogen atmosphere to obtain slurry.

While the temperature of the obtained slurry was kept at 20°C with stirring, 100 mL of a hexane solution of triethyl aluminum (concentration: 1 mol/L) was added dropwise thereto over 1 hour. Then, the mixture was stirred at the same temperature as above for 2 hours.

Then, the obtained reaction mixture was decantated to remove unreacted triethyl aluminum in the supernatant. In this way, 800 mL of hexane slurry of silica component [a-1] treated with triethyl aluminum was obtained.

(2) Preparation of raw material [a-2]

[(N-t-Butylamido)(tetramethyl-$\eta^5$-cyclopentadienyl)dimethylsilane]titanium-1,3-pentadiene (hereinafter, referred to as a "titanium complex") was dissolved at 200 mmol in 1250 mL of Isopar E [trade name of hydrocarbon mixture manufactured by Exxon Chemical Co., Inc. (US)]. To this solution, 25 mL of a hexane solution containing 1 mol/L commercially available butyl ethyl magnesium was added. The titanium complex concentration was adjusted to 0.1 mol/L by the addition of hexane to obtain titanium complex [a-2].

(3) Preparation of raw material [a-3]

Bis(hydrogenated tallow alkyl)methylammonium-tris(pentafluorophenyl)(4-hydroxyphenyl) borate (hereinafter, referred to as a "borate") (5.7 g) was added to 50 mL of toluene and dissolved therein to obtain a 100 mmol/L toluene solution of the borate. To this toluene solution of the borate, 5 mL of a hexane solution containing 1 mol/L ethoxydiethyl aluminum was added at room temperature. The borate concentration in the solution was adjusted to 70 mmol/L by the addition of hexane. Then, the mixture was stirred at room temperature for 1 hour to obtain reaction mixture [a-3] containing the borate.

(4) Synthesis of supported metallocene catalyst [A]

While 800 mL of the slurry of the silica component [a-1] obtained in the section (1) was stirred at 20°C, 32 mL of the titanium complex [a-2] obtained in the section (2) and 46 mL of the reaction mixture [a-3] containing the borate obtained in the section (3) were added thereto at the same time over 1 hour. The mixture was further stirred at the same temperature as above for 1 hour such that the titanium complex was reacted with the borate. Catalytic activity can be controlled by adjusting the amounts of the titanium complex [a-2] and the reaction mixture [a-3] containing the borate here. Specifically, the catalytic activity tends to be increased by increasing their amounts. After the completion of the reaction, the supernatant was removed, and unreacted catalytic raw materials were removed with hexane to obtain supported metallocene catalyst [A] containing a catalytic active species formed on the silica (hereinafter, also referred

to as solid catalytic component [A]).

(5) Synthesis of raw material(a-4)

An 8 L stainless autoclave thoroughly purged with nitrogen was charged with 2,000 mL of a hexane solution containing 1 mol/L $Mg_6(C_4H_9)_{12}Al(C_2H_5)_3$ (corresponding to 2000 mmol in total of magnesium and aluminum), and pressure-fed with 240 mL of a hexane solution containing 8.33 mol/L methyl hydrogen polysiloxane (manufactured by Shin-Etsu Chemical Co., Ltd.) with stirring at 80°C, and the stirring was further continued at 80°C over 2 hours. After the completion of the reaction, the reaction solution was cooled to ordinary temperature and used as raw material (a-4). The raw material (a-4) had a concentration of 0.786 mol/L in total of magnesium and aluminum.

[Production Example 2]

(Preparation of solid catalytic component [B])

(1) Synthesis of raw material(b-1)

An 8 L stainless autoclave thoroughly purged with nitrogen was charged with 2,000 mL of a hexane solution containing 1 mol/L $Mg_6(C_4H_9)_{12}Al(C_2H_5)_3$ (corresponding to 2000 mmol in total of magnesium and aluminum). To this autoclave, 146 mL of a hexane solution containing 5.47 mol/L n-butanol was added dropwise over 3 hours with stirring at 50°C. After the completion of the dropwise addition, the line was washed with 300 mL of hexane. The reaction was further continued with stirring at 50°C over 2 hours. After the completion of the reaction, the reaction solution was cooled to ordinary temperature and used as raw material (b-1). The raw material (b-1) had a magnesium concentration of 0.704 mol/L.

(2) Synthesis of raw material(b-2)

An 8 L stainless autoclave thoroughly purged with nitrogen was charged with 2,000 mL of a hexane solution containing 1 mol/L $Mg_6(C_4H_9)_{12}Al(C_2H_5)_3$ (corresponding to 2000 mmol in total of magnesium and aluminum), and pressure-fed with 240 mL of a hexane solution containing 8.33 mol/L methyl hydrogen polysiloxane (manufactured by Shin-Etsu Chemical Co., Ltd.) with stirring at 80°C, and the reaction was further continued with stirring at 80°C over 2 hours. After the completion of the reaction, the reaction solution was cooled to ordinary temperature and used as raw material (b-2). The raw material (b-2) had a concentration of 0.786 mol/L in total of magnesium and aluminum.

(3) Synthesis of carrier (B-1)

An 8 L stainless autoclave thoroughly purged with nitrogen was charged with 1,000 mL of a hexane solution containing 1 mol/L hydroxytrichlorosilane. To this autoclave, 1340 mL of a hexane solution of the organic magnesium compound as the raw material (b-1) (corresponding to 943 mmol of magnesium) was added dropwise at 65°C over 3 hours, and the reaction was further continued with stirring at 65°C for 1 hour. After the completion of the reaction, the supernatant was removed, and the resulting solid was washed with 1,800 mL of hexane four times to obtain a carrier (B-1). As a result of analyzing this carrier, the amount of magnesium contained per g of the solid was 7.5 mmol.

(4) Preparation of solid catalytic component [B]

To 1,970 mL of the hexane slurry containing 110 g of the carrier (B-1), 103 mL of a hexane solution containing 1 mol/L titanium tetrachloride and 131 mL of the raw material (b-2) were added at the same time over 3 hours with stirring at 10°C. Catalytic activity can be controlled by adjusting the amounts of the hexane solution of titanium tetrachloride and the raw material (b-2) here. Specifically, the catalytic activity tends to be increased by increasing their amounts. After the addition, the reaction was continued at 10°C for 1 hour. After the completion of the reaction, the supernatant was removed, and unreacted raw material components were removed by washing with hexane four times to prepare solid catalytic component [B].

[Production Example 3]

(Preparation of solid catalytic component [C])

(1) Synthesis of raw material(c-1)

An 8 L stainless autoclave thoroughly purged with nitrogen was charged with 2,000 mL of a hexane solution containing 1 mol/L $Mg_6(C_4H_9)_{12}Al(C_2H_5)_3$ (corresponding to 2000 mmol in total of magnesium and aluminum), and pressure-fed with 240 mL of a hexane solution containing 8.33 mol/L methyl hydrogen polysiloxane (manufactured by Shin-Etsu Chemical Co., Ltd.) with stirring at 80°C, and the reaction was further continued with stirring at 80°C over 2 hours. After the completion of the reaction, the reaction solution was cooled to ordinary temperature and used as raw material (c-1). The raw material (c-1) had a concentration of 0.786 mol/L in total of magnesium and aluminum.

(2) Preparation of solid catalytic component [C]

To an 8 L stainless autoclave purged with nitrogen, 1,600 mL of hexane was added. To the autoclave, 800 mL of a hexane solution containing 1 mol/L titanium tetrachloride and 800 mL of the raw material (c-1) were added at the same time over 5 hours with stirring at 10°C. The reaction was continued at 10°C for 1 hour. After the completion of the reaction, the supernatant was removed, and unreacted raw material components were removed by washing with hexane four times to prepare solid catalytic component [C]. The catalytic activity of this catalyst can be adjusted by a polymerization pressure in polymerization.

[Catalyst]

Catalyst 1: solid catalytic component [C] synthesized according to Production Example 3 described above Catalyst 2-1: solid catalytic component [B] synthesized from 103 mL of a hexane solution of titanium tetrachloride and 131 mL of the raw material (b-2) according to Production Example 2 described above Catalyst 2-2: solid catalytic component [B] synthesized according to Production Example 2 described above except that the amount of the hexane solution of titanium tetrachloride was changed to 21 mL, and the amount of the raw material (b-2) was changed to 26 mL

Catalyst 3-1: solid catalytic component [A] synthesized from 32 mL of the titanium complex [a-2] and 46 mL of the reaction mixture [a-3] according to Production Example 1 described above

Catalyst 3-2: solid catalytic component [A] synthesized according to Production Example 1 described above except that the amount of the titanium complex [a-2] was changed to 19.2 mL, and the amount of the reaction mixture [a-3] was changed to 27.6 mL

[Promoter]

Promoter 1: a mixture of commercially available triisobutyl aluminum and diisobutyl aluminum hydride (9:1 (mass ratio in order) mixture)

Promoter 2: $Mg_6(C_4H_9)_{12}AL(C_2H_5)_3$

Promoter 3: The raw material (a-4), the raw material (b-2) or the raw material(c-1) synthesized above

[Example 1]

The air inside a vessel-type 1.5 L polymerization reactor equipped with a stirrer was evacuated, and 500 mL of dehydrated normal hexane was then introduced into the polymerization reactor. Subsequently, 0.6 mL of the promoter 1 was dispersed in 100 mL of dehydrated normal hexane and introduced into the polymerization reactor, and the temperature of the polymerization reactor was adjusted to 80°C. Stirring was started at a rotational speed of 1,000 rpm. Subsequently, hydrogen for adjusting intrinsic viscosity IV (molecular weight) was introduced into the polymerization reactor such that its internal pressure was 0.045 MPa. Further, ethylene and 0.05 mol% of 1-butene (comonomer) were separately introduced through different lines into the polymerization reactor such that its internal pressure was 0.1 MPa. Then, 20.0 mg of the catalyst 1 was dispersed in 200 mL of dehydrated normal hexane and introduced into the polymerization reactor, followed by batch polymerization reaction for 1.0 hour. During the polymerization reaction, the internal

pressure of the polymerization reactor was appropriately maintained by additionally introducing ethylene and comonomer into the polymerization reactor. Then, the polymerization reactor was opened, and the contents were filtered under reduced pressure to separate and recover a solid component in a powder state. The obtained solid component was placed in a stainless beaker with an aperture of 68 mm and dried at 100°C for 2.0 hours to obtain an ultrahigh-molecular-weight polyethylene powder. The yield of the ultrahigh-molecular-weight polyethylene powder was 82.0 g, and catalytic activity (amount of polyethylene obtained per unit catalyst weight) was 4100 (g-PE/g-catalyst). Scales and an extremely coarse powder were removed using a sieve having an aperture size of 425 μm. After addition of 600 ppm of calcium stearate, the physical property evaluation of the ultrahigh-molecular-weight polyethylene powder was carried out. The results of evaluating the ultrahigh-molecular-weight polyethylene powder are shown in Table 1.

A microporous membrane for a secondary battery separator was produced by the method described in the section (5) or (6) using the obtained ultrahigh-molecular-weight polyethylene powder. Results of evaluating the obtained microporous membrane are shown in Table 1.

[Example 2]

The air inside a vessel-type 1.5 L polymerization reactor equipped with a stirrer was evacuated, and 500 mL of dehydrated normal hexane was then introduced into the polymerization reactor. Subsequently, 0.6 mL of the promoter 1 was dispersed in 100 mL of dehydrated normal hexane and introduced into the polymerization reactor, and the temperature of the polymerization reactor was adjusted to 80°C. Stirring was started at a rotational speed of 1,000 rpm. Subsequently, hydrogen for adjusting intrinsic viscosity IV (molecular weight) was introduced into the polymerization reactor such that its internal pressure was 0.12 MPa. Further, a mixed gas obtained by mixing ethylene with 0.05 mol% of 1-butene (comonomer) beforehand was introduced into the polymerization reactor such that its internal pressure was 0.4 MPa. Then, 10.0 mg of the catalyst 2-1 was dispersed in 200 mL of dehydrated normal hexane and introduced into the polymerization reactor, followed by batch polymerization reaction for 1.0 hour. During the polymerization reaction, the internal pressure of the polymerization reactor was appropriately maintained by additionally introducing the mixed gas into the polymerization reactor. Then, the polymerization reactor was opened, and the contents were filtered under reduced pressure to separate and recover a solid component in a powder state. The obtained solid component was placed in a metal tray and dried at 100°C for 2.0 hours in a state uniformly spread at a thickness of 5 mm to obtain an ultrahigh-molecular-weight polyethylene powder. The yield of the ultrahigh-molecular-weight polyethylene powder was 185.5 g, and catalytic activity (amount of polyethylene obtained per unit catalyst weight) was 18550 (g-PE/g-catalyst). Scales and an extremely coarse powder were removed using a sieve having an aperture size of 425 μm. Then, the physical property evaluation of the ultrahigh-molecular-weight polyethylene powder was carried out. The results of evaluating the ultrahigh-molecular-weight polyethylene powder are shown in Table 1.

A microporous membrane for a secondary battery separator was produced by the method described in the section (5) or (6) using the obtained ultrahigh-molecular-weight polyethylene powder. Results of evaluating the obtained microporous membrane are shown in Table 1.

[Example 3]

The air inside a vessel-type 1.5 L polymerization reactor equipped with a stirrer was evacuated, and 500 mL of a mixed solvent obtained by well mixing 70% by mass of dehydrated normal hexane and 30% by mass of liquid paraffin beforehand was then introduced into the polymerization reactor. Subsequently, 0.6 mL of the promoter 1 was dispersed in 100 mL of dehydrated normal hexane and introduced into the polymerization reactor, and the temperature of the polymerization reactor was adjusted to 80°C. Stirring was started at a rotational speed of 1,000 rpm. Subsequently, hydrogen for adjusting intrinsic viscosity IV (molecular weight) was introduced into the polymerization reactor such that its internal pressure was 0.016 MPa. Further, ethylene gas was introduced into the polymerization reactor such that its internal pressure was 0.1 MPa. Then, 20.0 mg of the catalyst 1 was dispersed in 200 mL of dehydrated normal hexane and introduced into the polymerization reactor, followed by batch polymerization reaction for 1.0 hour. During the polymerization reaction, the internal pressure of the polymerization reactor was appropriately maintained by additionally introducing ethylene gas into the polymerization reactor. Then, the polymerization reactor was opened, and the contents were filtered under reduced pressure to separate and recover a solid component in a powder state. The obtained solid component was placed in a stainless beaker with an aperture of 68 mm and dried at 70°C for 1.5 hours to obtain an ultrahigh-molecular-weight polyethylene powder. The yield of the ultrahigh-molecular-weight polyethylene powder was 70.2 g, and catalytic activity (amount of polyethylene obtained per unit catalyst weight) was 3510 (g-PE/g-catalyst). Scales and an extremely coarse powder were removed using a sieve having an aperture size of 425 μm. After addition of 1200 ppm of calcium stearate, the physical property evaluation of the ultrahigh-molecular-weight polyethylene powder was carried out. The results of evaluating the ultrahigh-molecular-weight polyethylene powder are shown in Table 1.

A microporous membrane for a secondary battery separator was produced by the method described in the

section (5) or (6) using the obtained ultrahigh-molecular-weight polyethylene powder. Results of evaluating the obtained microporous membrane are shown in Table 1.

[Example 4]

The air inside a vessel-type 1.5 L polymerization reactor equipped with a stirrer was evacuated, and 500 mL of dehydrated normal hexane was then introduced into the polymerization reactor. Subsequently, 0.6 mL of the promoter 1 was dispersed in 100 mL of dehydrated normal hexane and introduced into the polymerization reactor, and the temperature of the polymerization reactor was adjusted to 80°C. Stirring was started at a rotational speed of 1,000 rpm. Subsequently, hydrogen for adjusting intrinsic viscosity IV (molecular weight) was introduced into the polymerization reactor such that its internal pressure was 0.0036 MPa. Further, a mixed gas obtained by mixing ethylene with 0.05 mol% of 1-butene (comonomer) beforehand was introduced into the polymerization reactor such that its internal pressure was 0.4 MPa. Then, 6.0 mg of the catalyst 1 was dispersed in 200 mL of dehydrated normal hexane and introduced into the polymerization reactor, followed by batch polymerization reaction for 1.0 hour. During the polymerization reaction, the internal pressure of the polymerization reactor was appropriately maintained by additionally introducing the mixed gas into the polymerization reactor. Then, the polymerization reactor was opened, and the contents were filtered under reduced pressure to separate and recover a solid component in a powder state. The obtained solid component was placed in a metal tray and dried at 100°C for 5.0 hours in a state uniformly spread at a thickness of 5 mm to obtain an ultrahigh-molecular-weight polyethylene powder. The yield of the ultrahigh-molecular-weight polyethylene powder was 163.6 g, and catalytic activity (amount of polyethylene obtained per unit catalyst weight) was 27270 (g-PE/g-catalyst). Scales and an extremely coarse powder were removed using a sieve having an aperture size of 425 μm. After addition of 600 ppm of calcium stearate, the physical property evaluation of the ultrahigh-molecular-weight polyethylene powder was carried out. The results of evaluating the ultrahigh-molecular-weight polyethylene powder are shown in Table 1.

A microporous membrane for a secondary battery separator was produced by the method described in the section (5) or (6) using the obtained ultrahigh-molecular-weight polyethylene powder. Results of evaluating the obtained microporous membrane are shown in Table 1.

[Example 5]

The air inside a vessel-type 1.5 L polymerization reactor equipped with a stirrer was evacuated, and 500 mL of a mixed solvent obtained by well mixing 70% by mass of dehydrated normal hexane and 30% by mass of liquid paraffin beforehand was then introduced into the polymerization reactor. Subsequently, 0.6 mL of the promoter 1 was dispersed in 100 mL of dehydrated normal hexane and introduced into the polymerization reactor, and the temperature of the polymerization reactor was adjusted to 80°C. Stirring was started at a rotational speed of 1,000 rpm. Subsequently, hydrogen for adjusting intrinsic viscosity IV (molecular weight) was introduced into the polymerization reactor such that its internal pressure was 0.0016 MPa. Further, ethylene and 3.0 mol% of 1-butene (comonomer) were separately introduced through different lines into the polymerization reactor such that its internal pressure was 0.4 MPa. Then, 20.0 mg of the catalyst 2-2 was dispersed in 200 mL of dehydrated normal hexane and introduced into the polymerization reactor, followed by batch polymerization reaction for 0.7 hour. During the polymerization reaction, the internal pressure of the polymerization reactor was appropriately maintained by additionally introducing ethylene and comonomer into the polymerization reactor. Then, the polymerization reactor was opened, and the contents were filtered under reduced pressure to separate and recover a solid component in a powder state. The obtained solid component was placed in a stainless beaker with an aperture of 68 mm and dried at 70°C for 2.0 hours to obtain an ultrahigh-molecular-weight polyethylene powder. The yield of the ultrahigh-molecular-weight polyethylene powder was 83.2 g, and catalytic activity (amount of polyethylene obtained per unit catalyst weight) was 4160 (g-PE/g-catalyst). Scales and an extremely coarse powder were removed using a sieve having an aperture size of 425 μm. The physical property evaluation of the ultrahigh-molecular-weight polyethylene powder was carried out after addition of 1200 ppm of calcium stearate. The results of evaluating the ultrahigh-molecular-weight polyethylene powder are shown in Table 1.

Microporous membranes for secondary battery separators were produced by the methods described above in (5) or (6) using the obtained ultrahigh-molecular-weight polyethylene powder. The obtained results of evaluating the microporous membranes are shown in Table 1.

[Example 6]

The air inside a vessel-type 1.5 L polymerization reactor equipped with a stirrer was evacuated, and 500 mL of dehydrated normal hexane was then introduced into the polymerization reactor. Subsequently, 0.6 mL of the promoter 3 was dispersed in 100 mL of dehydrated normal hexane and introduced into the polymerization reactor, and the temperature of the polymerization reactor was adjusted to 80°C. Stirring was started at a rotational speed of 1,000 rpm.

Subsequently, hydrogen for adjusting intrinsic viscosity IV (molecular weight) was introduced into the polymerization reactor such that its internal pressure was 0.0008 MPa. Further, a mixed gas obtained by mixing ethylene with 0.03 mol% of 1-butene (comonomer) beforehand was introduced into the polymerization reactor such that its internal pressure was 0.4 MPa. Then, 20.0 mg of the catalyst 3-1 was dispersed in 200 mL of dehydrated normal hexane and introduced into the polymerization reactor, followed by batch polymerization reaction for 1.0 hour. During the polymerization reaction, the internal pressure of the polymerization reactor was appropriately maintained by additionally introducing the mixed gas into the polymerization reactor. Then, the polymerization reactor was opened, and the contents were filtered under reduced pressure to separate and recover a solid component in a powder state. The obtained solid component was placed in a metal tray and dried at 110°C for 2.5 hours in a state uniformly spread at a thickness of 5 mm to obtain an ultrahigh-molecular-weight polyethylene powder. The yield of the ultrahigh-molecular-weight polyethylene powder was 144.0 g, and catalytic activity (amount of polyethylene obtained per unit catalyst weight) was 7200 (g-PE/g-catalyst). Scales and an extremely coarse powder were removed using a sieve having an aperture size of 425 μm. After addition of 600 ppm of calcium stearate, the physical property evaluation of the ultrahigh-molecular-weight polyethylene powder was carried out. The results of evaluating the ultrahigh-molecular-weight polyethylene powder are shown in Table 1.

Microporous membranes for secondary battery separators were produced by the methods described above in (5) or (6) using the obtained ultrahigh-molecular-weight polyethylene powder. The obtained results of evaluating the microporous membranes are shown in Table 1.

[Example 7]

The air inside a vessel-type 1.5 L polymerization reactor equipped with a stirrer was evacuated, and 500 mL of a mixed solvent obtained by well mixing 70% by mass of dehydrated normal hexane and 30% by mass of liquid paraffin beforehand was then introduced into the polymerization reactor. Subsequently, 0.6 mL of the promoter 1 was dispersed in 100 mL of dehydrated normal hexane and introduced into the polymerization reactor, and the temperature of the polymerization reactor was adjusted to 78°C. Stirring was started at a rotational speed of 1,000 rpm. Subsequently, hydrogen for adjusting intrinsic viscosity IV (molecular weight) was introduced into the polymerization reactor such that its internal pressure was 0.000063 MPa. Further, ethylene and 5.0 mol% of 1-butene (comonomer) were separately introduced through different lines into the polymerization reactor such that its internal pressure was 0.07 MPa. Then, 20.0 mg of the catalyst 1 was dispersed in 200 mL of dehydrated normal hexane and introduced into the polymerization reactor, followed by batch polymerization reaction for 1.0 hour. During the polymerization reaction, the internal pressure of the polymerization reactor was appropriately maintained by additionally introducing ethylene and comonomer into the polymerization reactor. Then, the polymerization reactor was opened, and the contents were filtered under reduced pressure to separate and recover a solid component in a powder state. The obtained solid component was placed in a stainless beaker with an aperture of 68 mm and dried at 70°C for 1.5 hours to obtain an ultrahigh-molecular-weight polyethylene powder. The yield of the ultrahigh-molecular-weight polyethylene powder was 49.8 g, and catalytic activity (amount of polyethylene obtained per unit catalyst weight) was 2490 (g-PE/g-catalyst). Scales and an extremely coarse powder were removed using a sieve having an aperture size of 425 μm. Then, the physical property evaluation of the ultrahigh-molecular-weight polyethylene powder was carried out. The results of evaluating the ultrahigh-molecular-weight polyethylene powder are shown in Table 2.

A high-strength fiber was produced by the method described in the section (11) or (12) using the obtained ultrahigh-molecular-weight polyethylene powder. Results of evaluating the obtained high-strength fiber are shown in Table 2.

[Example 8]

The air inside a vessel-type 1.5 L polymerization reactor equipped with a stirrer was evacuated, and 500 mL of dehydrated normal hexane was then introduced into the polymerization reactor. Subsequently, 0.6 mL of the promoter 2 was dispersed in 100 mL of dehydrated normal hexane and introduced into the polymerization reactor, and the temperature of the polymerization reactor was adjusted to 78°C. Stirring was started at a rotational speed of 1,000 rpm. Subsequently, hydrogen for adjusting intrinsic viscosity IV (molecular weight) was introduced into the polymerization reactor such that its internal pressure was 0.00035 MPa. Further, ethylene and 0.05 mol% of 1-butene (comonomer) were separately introduced through different lines into the polymerization reactor such that its internal pressure was 0.35 MPa. Then, 5.0 mg of the catalyst 1 was dispersed in 200 mL of dehydrated normal hexane and introduced into the polymerization reactor, followed by batch polymerization reaction for 1.0 hour. During the polymerization reaction, the internal pressure of the polymerization reactor was appropriately maintained by additionally introducing ethylene and comonomer into the polymerization reactor. Then, the polymerization reactor was opened, and the contents were filtered under reduced pressure to separate and recover a solid component in a powder state. The obtained solid component was placed in a stainless beaker with an aperture of 68 mm and dried at 100°C for 2.5 hours to obtain an

ultrahigh-molecular-weight polyethylene powder. The yield of the ultrahigh-molecular-weight polyethylene powder was 131.6 g, and catalytic activity (amount of polyethylene obtained per unit catalyst weight) was 26320 (g-PE/g-catalyst). Scales and an extremely coarse powder were removed using a sieve having an aperture size of 425 μm. Then, the physical property evaluation of the ultrahigh-molecular-weight polyethylene powder was carried out. The results of evaluating the ultrahigh-molecular-weight polyethylene powder are shown in Table 1.

High-strength fibers were produced by the methods described above in (11) or (12) using the obtained ultrahigh-molecular-weight polyethylene powder. The obtained results of evaluating the high-strength fibers are shown in Table 2.

[Example 9]

The air inside a vessel-type 1.5 L polymerization reactor equipped with a stirrer was evacuated, and 500 mL of a mixed solvent obtained by well mixing 70% by mass of dehydrated normal hexane and 30% by mass of liquid paraffin beforehand was then introduced into the polymerization reactor. Subsequently, 0.6 mL of the promoter 2 was dispersed in 100 mL of dehydrated normal hexane and introduced into the polymerization reactor, and the temperature of the polymerization reactor was adjusted to 58°C. Stirring was started at a rotational speed of 1,000 rpm. Subsequently, ethylene gas was introduced into the polymerization reactor such that its internal pressure was 0.4 MPa. Then, 20.0 mg of the catalyst 2-2 was dispersed in 200 mL of dehydrated normal hexane and introduced into the polymerization reactor, followed by batch polymerization reaction for 0.7 hour. During the polymerization reaction, the internal pressure of the polymerization reactor was appropriately maintained by additionally introducing ethylene gas into the polymerization reactor. Then, the polymerization reactor was opened, and the contents were filtered under reduced pressure to separate and recover a solid component in a powder state. The obtained solid component was placed in a stainless beaker with an aperture of 68 mm and dried at 70°C for 2.0 hours to obtain an ultrahigh-molecular-weight polyethylene powder. The yield of the ultrahigh-molecular-weight polyethylene powder was 98.6 g, and catalytic activity (amount of polyethylene obtained per unit catalyst weight) was 4930 (g-PE/g-catalyst). Scales and an extremely coarse powder were removed using a sieve having an aperture size of 425 μm. Then, the physical property evaluation of the ultrahigh-molecular-weight polyethylene powder was carried out. The results of evaluating the ultrahigh-molecular-weight polyethylene powder are shown in Table 2.

High-strength fibers were produced by the methods described above in (11) or (12) using the obtained ultrahigh-molecular-weight polyethylene powder. The obtained results of evaluating the high-strength fibers are shown in Table 2.

[Example 10]

The air inside a vessel-type 1.5 L polymerization reactor equipped with a stirrer was evacuated, and 500 mL of a mixed solvent obtained by well mixing 50% by mass of dehydrated normal hexane and 50% by mass of liquid paraffin beforehand was then introduced into the polymerization reactor. Subsequently, 0.6 mL of the promoter 2 was dispersed in 100 mL of dehydrated normal hexane and introduced into the polymerization reactor, and the temperature of the polymerization reactor was adjusted to 50°C. Stirring was started at a rotational speed of 1,000 rpm. Subsequently, ethylene gas was introduced into the polymerization reactor such that its internal pressure was 0.4 MPa. Then, 20.0 mg of the catalyst 2-2 was dispersed in 200 mL of dehydrated normal hexane and introduced into the polymerization reactor, followed by batch polymerization reaction for 1.0 hour. During the polymerization reaction, the internal pressure of the polymerization reactor was appropriately maintained by additionally introducing ethylene gas into the polymerization reactor. Then, the polymerization reactor was opened, and the contents were filtered under reduced pressure to separate and recover a solid component in a powder state. The obtained solid component was placed in a stainless beaker with an aperture of 68 mm and dried at 65°C for 1.5 hours to obtain an ultrahigh-molecular-weight polyethylene powder. The yield of the ultrahigh-molecular-weight polyethylene powder was 70.4 g, and catalytic activity (amount of polyethylene obtained per unit catalyst weight) was 3520 (g-PE/g-catalyst). Scales and an extremely coarse powder were removed using a sieve having an aperture size of 425 μm. Then, the physical property evaluation of the ultrahigh-molecular-weight polyethylene powder was carried out. The results of evaluating the ultrahigh-molecular-weight polyethylene powder are shown in Table 2.

A high-strength fiber was produced by the method described in the section (11) or (12) using the obtained ultrahigh-molecular-weight polyethylene powder. Results of evaluating the obtained high-strength fiber are shown in Table 2.

[Example 11]

The air inside a vessel-type 1.5 L polymerization reactor equipped with a stirrer was evacuated, and 500 mL of a mixed solvent obtained by well mixing 70% by mass of dehydrated normal hexane and 30% by mass of liquid paraffin beforehand was then introduced into the polymerization reactor. Subsequently, 0.6 mL of the promoter 3 was dispersed

in 100 mL of dehydrated normal hexane and introduced into the polymerization reactor, and the temperature of the polymerization reactor was adjusted to 70°C. Stirring was started at a rotational speed of 1,000 rpm. Subsequently, ethylene gas was introduced into the polymerization reactor such that its internal pressure was 0.8 MPa. Then, 20.0 mg of the catalyst 3-2 was dispersed in 200 mL of dehydrated normal hexane and introduced into the polymerization reactor, followed by batch polymerization reaction for 1.5 hours. During the polymerization reaction, the internal pressure of the polymerization reactor was appropriately maintained by additionally introducing ethylene gas into the polymerization reactor. Then, the polymerization reactor was opened, and the contents were filtered under reduced pressure to separate and recover a solid component in a powder state. The obtained solid component was placed in a stainless beaker with an aperture of 68 mm and dried at 70°C for 2.0 hours to obtain an ultrahigh-molecular-weight polyethylene powder. The yield of the ultrahigh-molecular-weight polyethylene powder was 86.4 g, and catalytic activity (amount of polyethylene obtained per unit catalyst weight) was 4320 (g-PE/g-catalyst). Scales and an extremely coarse powder were removed using a sieve having an aperture size of 425 μm. Then, the physical property evaluation of the ultrahigh-molecular-weight polyethylene powder was carried out. The results of evaluating the ultrahigh-molecular-weight polyethylene powder are shown in Table 2.

A high-strength fiber was produced by the method described in the section (11) or (12) using the obtained ultrahigh-molecular-weight polyethylene powder. Results of evaluating the obtained high-strength fiber are shown in Table 2.

[Example 12]

Polymerization was performed by the method described in Example 3 except that the air inside a vessel-type 1.5 L polymerization reactor equipped with a stirrer was evacuated, and 500 mL of a mixed solvent obtained by well mixing 70% by mass of dehydrated normal hexane and 30% by mass of dibutyl phthalate beforehand was then introduced into the polymerization reactor. Results of evaluating the ultrahigh-molecular-weight polyethylene powder are shown in Table 1. A microporous membrane for a secondary battery separator was produced by the method described in the section (5) or (6) using the obtained ultrahigh-molecular-weight polyethylene powder. Results of evaluating the obtained microporous membrane are shown in Table 1.

[Example 13]

Polymerization was performed by the method described in Example 3 except that the air inside a vessel-type 1.5 L polymerization reactor equipped with a stirrer was evacuated, and 500 mL of a mixed solvent obtained by well mixing 50% by mass of dehydrated normal hexane and 50% by mass of liquid paraffin beforehand was then introduced into the polymerization reactor; and ethylene gas was introduced into the polymerization reactor such that its internal pressure was 0.07 MPa. Results of evaluating the ultrahigh-molecular-weight polyethylene powder are shown in Table 1. A microporous membrane for a secondary battery separator was produced by the method described in the section (5) or (6) using the obtained ultrahigh-molecular-weight polyethylene powder. Results of evaluating the obtained microporous membrane are shown in Table 1.

[Table 1]

| | | Unit | Example 1 | Example 2 | Example 3 | Example 4 | Example 5 | Example 6 | Example 12 | Example 13 |
|---|---|---|---|---|---|---|---|---|---|---|
| Polymerization conditions | Polymerization temperature | °C | 80 | 80 | 80 | 80 | 80 | 80 | 80 | 80 |
| | Polymerization pressure | MPa | 0.1 | 0.4 | 0.1 | 0.4 | 0.4 | 0.4 | 0.1 | 0.07 |
| | Hydrogen concentration | mol% | 45 | 30 | 16 | 0.9 | 0.4 | 0.2 | 16 | 16 |
| | Hydrogen pressure | MPa | 0.045 | 0.12 | 0.016 | 0.0036 | 0.0016 | 0.0008 | 0.016 | 0.016 |
| | Comonomer (gas phase concentration) | mol% | 0.05 | 0.05 | 0 | 0.05 | 3.0 | 0.03 | 0 | 0 |
| | Catalyst type | - | Catalyst 1 | Catalyst 2-1 | Catalyst 1 | Catalyst 1 | Catalyst 2-2 | Catalyst 3-1 | Catalyst 1 | Catalyst 1 |
| | Promoter type | - | Promoter 1 | Promoter 1 | Promoter 1 | Promoter 1 | Promoter 1 | Promoter 3 | Promoter 1 | Promoter 1 |
| | Polymerization residence time | h | 1.0 | 1.0 | 1.0 | 1.0 | 0.7 | 1.0 | 1.0 | 1.0 |
| | Amount of catalyst | mg | 20.0 | 10.0 | 20.0 | 6.0 | 20.0 | 20.0 | 20.0 | 20.0 |
| Drying conditions | Drying temperature | °C | 100 | 100 | 70 | 100 | 70 | 110 | 70 | 70 |
| | Drying time | h | 2.0 | 2.0 | 1.5 | 5.0 | 2.0 | 2.5 | 1.5 | 1.5 |
| Polyethylene powder | Yield | g | 82.0 | 185.5 | 70.2 | 163.6 | 83.2 | 144.0 | 72.2 | 48.2 |
| | Catalytic activity | g-PE/g-catalyst | 4100 | 18550 | 3510 | 27270 | 4160 | 7200 | 3560 | 2060 |
| | $D_{10}$ | μm | 68 | 60 | 80 | 86 | 63 | 131 | 80 | 80 |
| | $D_{50}$ | μm | 105 | 125 | 101 | 177 | 90 | 209 | 106 | 108 |
| | $D_{90}$ | μm | 136 | 192 | 136 | 310 | 139 | 301 | 134 | 136 |
| | $D_{90}/D_{10}$ | - | 2.0 | 3.2 | 1.7 | 3.6 | 2.2 | 2.3 | 1.7 | 1.7 |
| | Melting point (Tm2) | °C | 137 | 137 | 137 | 137 | 131 | 135 | 137 | 137 |
| | Intrinsic viscosity IV | dL/g | 1.1 | 1.7 | 2.7 | 8.5 | 9.8 | 11.3 | 2.7 | 2.7 |
| | Average value $T_S$ of swelling onset temperatures of powders of $D_{10}$, $D_{50}$, and $D_{90}$ | °C | 92 | 95 | 100 | 110 | 115 | 110 | 102 | 103 |
| | Standard deviation s of swelling onset temperatures of powders of $D_{10}$, $D_{50}$, and $D_{90}$ | °C | 6.1 | 3.5 | 2.1 | 1.8 | 3.1 | 3.3 | 2.2 | 0.8 |
| | Comonomer content measured by $^{13}$C-NMR | mol% | 0 | 0 | 0 | 0 | 0.06 | 0.5 | 0 | 0 |
| | Ti content | ppm | 2.9 | 1.9 | 4.2 | 1.3 | 4.1 | 2.6 | 4.1 | 4.8 |
| | Al content | ppm | 2.7 | 1.8 | 4.3 | 1.1 | 4.1 | 2.4 | 4.3 | 4.7 |
| | Si content | ppm | < 1 | < 1 | < 1 | < 1 | < 1 | 30 | < 1 | < 1 |
| Additive | Calcium stearate | ppm | 600 | 0 | 1200 | 600 | 1200 | 600 | 1200 | 1200 |
| Microporous membrane | Processability in general swelling (the number of defects) | - | ◎ | ◎ | ◎ | ◎ | ○ | ◎ | ◎ | ◎ |
| | | number/m$^2$ | 10 | 9 | 6 | 11 | 34 | 14 | 8 | 4 |
| | Processability in low-temperature swelling (the number of defects) | - | ○ | ○ | ◎ | ◎ | ○ | ○ | ◎ | ◎ |
| | | number/m$^2$ | 25 | 21 | 9 | 11 | 40 | 34 | 10 | 5 |
| | Processability in general swelling (uneven film thickness) | - | ◎ | ◎ | ◎ | ◎ | ○ | ◎ | ◎ | ◎ |
| | | μm | 1.2 | 0.9 | 1.3 | 1.2 | 1.8 | 1.3 | 1.4 | 1 |
| | Processability in low-temperature swelling (uneven film thickness) | - | △ | ○ | ◎ | ◎ | ○ | ◎ | ◎ | ◎ |
| | | μm | 3 | 1.8 | 1.4 | 1.1 | 1.9 | 1.1 | 1.4 | 1 |
| | Puncture strength | - | △ | ○ | ◎ | ◎ | ◎ | ◎ | ◎ | ◎ |
| | | gf/(g/m$^2$) | 63 | 72 | 84 | 88 | 92 | 94 | 81 | 88 |
| | Thermal shrinkage at 120°C at porosity of 50% | - | ◎ | ◎ | ◎ | ◎ | ○ | △ | ◎ | ◎ |
| | | % | 17 | 18 | 16 | 19 | 24 | 28 | 18 | 14 |

[Table 2]

| | | Unit | Example 7 | Example 8 | Example 9 | Example 10 | Example 11 |
|---|---|---|---|---|---|---|---|
| Polymerization conditions | Polymerization temperature | °C | 78 | 78 | 58 | 50 | 70 |
| | Polymerization pressure | MPa | 0.07 | 0.35 | 0.4 | 0.4 | 0.8 |
| | Hydrogen concentration | mol% | 0.09 | 0.1 | 0 | 0 | 0 |
| | Hydrogen pressure | MPa | 0.000063 | 0.00035 | 0 | 0 | 0 |
| | Comonomer (gas phase concentration) | mol% | 5.0 | 0.05 | 0 | 0 | 0 |
| | Catalyst type | - | Catalyst 1 | Catalyst 1 | Catalyst 2-2 | Catalyst 2-2 | Catalyst 3-2 |
| | Promoter type | - | Promoter 1 | Promoter 2 | Promoter 2 | Promoter 2 | Promoter 3 |
| | Polymerization residence time | h | 1.0 | 1.0 | 0.7 | 1.0 | 1.5 |
| | Amount of catalyst | mg | 20.0 | 5.0 | 20.0 | 20.0 | 20.0 |
| Drying conditions | Drying temperature | °C | 70 | 100 | 70 | 65 | 70 |
| | Drying time | h | 1.5 | 2.5 | 2.0 | 1.5 | 2.0 |
| Polyethylene powder | Yield | g | 49.8 | 131.6 | 98.6 | 70.4 | 86.4 |
| | Catalytic activity | g-PE/g-catalyst | 2490 | 26320 | 4930 | 3520 | 4320 |
| | $D_{10}$ | μm | 75 | 76 | 65 | 68 | 111 |
| | $D_{50}$ | μm | 84 | 170 | 103 | 93 | 169 |
| | $D_{90}$ | μm | 105 | 274 | 156 | 129 | 233 |
| | $D_{90}/D_{10}$ | - | 1.4 | 3.6 | 2.4 | 1.9 | 2.1 |
| | Melting point (Tm2) | °C | 129 | 137 | 137 | 137 | 135 |
| | Intrinsic viscosity IV | dL/g | 13.7 | 17 | 28.5 | 30.6 | 32.5 |
| | Average value $T_S$ of swelling onset temperatures of powders of $D_{10}$, $D_{50}$, and $D_{90}$ | °C | 117 | 117 | 122 | 124 | 128 |
| | Standard deviation s of swelling onset temperatures of powders of $D_{10}$, $D_{50}$, and $D_{90}$ | °C | 2.4 | 5.8 | 3.8 | 2.5 | 3.3 |
| | Comonomer content measured by $^{13}$C-NMR | mol% | 0 | 0.04 | 0 | 0 | 0 |
| | Ti content | ppm | 4.8 | 1.2 | 3 | 4.2 | 3.5 |
| | Al content | ppm | 4.7 | 1.0 | 2.8 | 4.4 | 3.4 |
| | Si content | ppm | < 1 | < 1 | < 1 | < 1 | 26 |
| Additive | Calcium stearate | ppm | 0 | 0 | 0 | 0 | 0 |
| High-strength fiber | Processability in general swelling (the number of thread lumps) | - | ◎ | ○ | ○ | ◎ | ○ |
| | | number/m | 1 | 5 | 5 | 0 | 5 |
| | Processability in low-temperature swelling (the number of thread lumps) | - | ○ | △ | △ | ◎ | △ |
| | | number/m | 3 | 8 | 6 | 1 | 6 |
| | Processability in general swelling (uneven thread diameter) | - | ◎ | △ | ○ | ◎ | ○ |
| | | μm | 2 | 5 | 4 | 1 | 4 |
| | Processability in low-temperature swelling (uneven thread diameter) | - | ○ | △ | △ | ◎ | △ |
| | | μm | 3 | 6 | 5 | 1 | 5 |
| | Processability in general swelling (Tensile breaking strength) | - | ◎ | ○ | ◎ | ◎ | ◎ |
| | | cN/dtex | 32 | 25 | 30 | 39 | 30 |
| | Processability in low-temperature swelling (Tensile breaking strength) | - | ○ | △ | ○ | ◎ | ○ |
| | | cN/dtex | 25 | 21 | 26 | 35 | 29 |

[Comparative Example 1]

The air inside a vessel-type 1.5 L polymerization reactor equipped with a stirrer was evacuated, and 500 mL

of dehydrated normal hexane was then introduced into the polymerization reactor. Subsequently, 0.6 mL of the promoter 1 was dispersed in 100 mL of dehydrated normal hexane and introduced into the polymerization reactor, and the temperature of the polymerization reactor was adjusted to 80°C. Stirring was started at a rotational speed of 1,000 rpm. Subsequently, hydrogen for adjusting intrinsic viscosity IV (molecular weight) was introduced into the polymerization reactor such that its internal pressure was 0.24 MPa. Further, a mixed gas obtained by mixing ethylene with 0.05 mol% of 1-butene (comonomer) beforehand was introduced into the polymerization reactor such that its internal pressure was 0.4 MPa. Then, 10.0 mg of the catalyst 2-1 was dispersed in 200 mL of dehydrated normal hexane and introduced into the polymerization reactor, followed by batch polymerization reaction for 1.0 hour. During the polymerization reaction, the internal pressure of the polymerization reactor was appropriately maintained by additionally introducing the mixed gas into the polymerization reactor. Then, the polymerization reactor was opened, and the contents were filtered under reduced pressure to separate and recover a solid component in a powder state. The obtained solid component was placed in a stainless beaker with an aperture of 68 mm and dried at 100°C for 1.0 hour to obtain a polyethylene powder. The yield of the polyethylene powder was 174.4 g, and catalytic activity (amount of polyethylene obtained per unit catalyst weight) was 17440 (g-PE/g-catalyst). Scales and an extremely coarse powder were removed using a sieve having an aperture size of 425 μm. Then, the physical property evaluation of the ultrahigh-molecular-weight polyethylene powder was carried out. The results of evaluating the ultrahigh-molecular-weight polyethylene powder are shown in Table 3.

The production of a microporous membrane for a secondary battery separator was attempted by the method described in the section (5) or (6) using the obtained polyethylene powder and however, ended in failure.

[Comparative Example 2]

The air inside a vessel-type 1.5 L polymerization reactor equipped with a stirrer was evacuated, and 500 mL in total of 70% by mass of dehydrated normal hexane and 30% by mass of liquid paraffin was then introduced into the polymerization reactor. Subsequently, 0.6 mL of the promoter 2 was dispersed in 100 mL of dehydrated normal hexane and introduced into the polymerization reactor, and the temperature of the polymerization reactor was adjusted to 40°C. Stirring was started at a rotational speed of 1,000 rpm. Subsequently, ethylene gas was introduced into the polymerization reactor such that its internal pressure was 0.4 MPa. Then, 20.0 mg of the catalyst 2-2 was dispersed in 200 mL of dehydrated normal hexane and introduced into the polymerization reactor, followed by batch polymerization reaction for 1.0 hour. During the polymerization reaction, the internal pressure of the polymerization reactor was appropriately maintained by additionally introducing ethylene gas into the polymerization reactor. Then, the polymerization reactor was opened, and the contents were filtered under reduced pressure to separate and recover a solid component in a powder state. The obtained solid component was placed in a stainless beaker with an aperture of 68 mm and dried at 70°C for 2.5 hours to obtain an ultrahigh-molecular-weight polyethylene powder. The yield of the ultrahigh-molecular-weight polyethylene powder was 93.4 g, and catalytic activity (amount of polyethylene obtained per unit catalyst weight) was 4670 (g-PE/g-catalyst). Scales and an extremely coarse powder were removed using a sieve having an aperture size of 425 μm. Then, the physical property evaluation of the ultrahigh-molecular-weight polyethylene powder was carried out. The results of evaluating the ultrahigh-molecular-weight polyethylene powder are shown in Table 4.

High-strength fibers were produced by the methods described above in (11) or (12) using the obtained ultrahigh-molecular-weight polyethylene powder. The obtained results of evaluating the high-strength fibers are shown in Table 4.

[Comparative Example 3]

The air inside a vessel-type 1.5 L polymerization reactor equipped with a stirrer was evacuated, and 500 mL of dehydrated normal hexane was then introduced into the polymerization reactor. Subsequently, 0.6 mL of the promoter 1 was dispersed in 100 mL of dehydrated normal hexane and introduced into the polymerization reactor, and the temperature of the polymerization reactor was adjusted to 80°C. Stirring was started at a rotational speed of 1,000 rpm. Subsequently, hydrogen for adjusting intrinsic viscosity IV (molecular weight) was introduced into the polymerization reactor such that its internal pressure was 0.0036 MPa. Further, ethylene gas was introduced into the polymerization reactor such that its internal pressure was 0.4 MPa. Then, 5.0 mg of the catalyst 1 was dispersed in 200 mL of dehydrated normal hexane and introduced into the polymerization reactor, followed by batch polymerization reaction for 1.0 hour. During the polymerization reaction, the internal pressure of the polymerization reactor was appropriately maintained by additionally introducing ethylene gas into the polymerization reactor. Then, the polymerization reactor was opened, and the contents were filtered under reduced pressure to separate and recover a solid component in a powder state. The obtained solid component was placed in a stainless beaker with an aperture of 68 mm and dried at 60°C for 3.0 hours to obtain an ultrahigh-molecular-weight polyethylene powder. The yield of the ultrahigh-molecular-weight polyethylene powder was 136.0 g, and catalytic activity (amount of polyethylene obtained per unit catalyst weight) was 27200 (g-PE/g-catalyst). Scales and an extremely coarse powder were removed using a sieve having an aperture size of 425 μm. After addition of 600 ppm of calcium stearate, the physical property evaluation of the ultrahigh-molecular-weight

polyethylene powder was carried out. The results of evaluating the ultrahigh-molecular-weight polyethylene powder are shown in Table 3.

A microporous membrane for a secondary battery separator was produced by the method described in the section (5) or (6) using the obtained ultrahigh-molecular-weight polyethylene powder. Results of evaluating the obtained microporous membrane are shown in Table 3.

[Comparative Example 4]

The air inside a vessel-type 1.5 L polymerization reactor equipped with a stirrer was evacuated, and 500 mL of dehydrated normal hexane was then introduced into the polymerization reactor. Subsequently, 0.6 mL of the promoter 2 was dispersed in 100 mL of dehydrated normal hexane and introduced into the polymerization reactor, and the temperature of the polymerization reactor was adjusted to 50°C. Stirring was started at a rotational speed of 1,000 rpm. Subsequently, ethylene gas was introduced into the polymerization reactor such that its internal pressure was 0.4 MPa. Then, 20.0 mg of the catalyst 2-2 was dispersed in 200 mL of dehydrated normal hexane and introduced into the polymerization reactor, followed by batch polymerization reaction for 1.0 hour. During the polymerization reaction, the internal pressure of the polymerization reactor was appropriately maintained by additionally introducing ethylene gas into the polymerization reactor. Then, the polymerization reactor was opened, and the contents were filtered under reduced pressure to separate and recover a solid component in a powder state. The obtained solid component was placed in a stainless beaker with an aperture of 68 mm and dried at 65°C for 1.5 hours to obtain an ultrahigh-molecular-weight polyethylene powder. The yield of the ultrahigh-molecular-weight polyethylene powder was 79.6 g, and catalytic activity (amount of polyethylene obtained per unit catalyst weight) was 3980 (g-PE/g-catalyst). Scales and an extremely coarse powder were removed using a sieve having an aperture size of 425 μm. Then, the physical property evaluation of the ultrahigh-molecular-weight polyethylene powder was carried out. The results of evaluating the ultrahigh-molecular-weight polyethylene powder are shown in Table 4.

A high-strength fiber was produced by the method described in the section (11) or (12) using the obtained ultrahigh-molecular-weight polyethylene powder. Results of evaluating the obtained high-strength fiber are shown in Table 4.

[Table 3]

| | | Unit | Comparative Example 1 | Comparative Example 3 |
|---|---|---|---|---|
| Polymerization conditions | Polymerization temperature | °C | 80 | 80 |
| | Polymerization pressure | MPa | 0.4 | 0.4 |
| | Hydrogen concentration | mol% | 60 | 0.9 |
| | Hydrogen pressure | MPa | 0.24 | 0.0036 |
| | Comonomer (gas phase concentration) | mol% | 0.05 | 0 |
| | Catalyst type | - | Catalyst 2-1 | Catalyst 1 |
| | Promoter type | - | Promoter 1 | Promoter 1 |
| | Polymerization residence time | h | 1.0 | 1.0 |
| | Amount of catalyst | mg | 10.0 | 5.0 |
| Drying conditions | Drying temperature | °C | 100 | 60 |
| | Drying time | h | 1.0 | 3.0 |
| Polyethylene powder | Yield | g | 174.4 | 136.0 |
| | Catalytic activity | g-PE/g-catalyst | 17440 | 27200 |
| | $D_{10}$ | μm | 66 | 81 |
| | $D_{50}$ | μm | 130 | 177 |
| | $D_{90}$ | μm | 211 | 300 |
| | $D_{90}/D_{10}$ | - | 3.2 | 3.7 |
| | Melting point (Tm2) | °C | 137 | 137 |
| | Intrinsic viscosity IV | dL/g | 0.7 | 8.5 |
| | Average value $T_S$ of swelling onset temperatures of powders of $D_{10}$, $D_{50}$, and $D_{90}$ | °C | 91 | 131 |
| | Standard deviation s of swelling onset temperatures of powders of $D_{10}$, $D_{50}$, and $D_{90}$ | °C | 5.2 | 5.1 |
| | Comonomer content measured by $^{13}C$-NMR | mol% | 0 | 0 |
| | Ti content | ppm | 2.1 | 1.5 |
| | Al content | ppm | 2.0 | 1.6 |
| | Si content | ppm | < 1 | < 1 |

(continued)

| | | Unit | Comparative Example 1 | Comparative Example 3 |
|---|---|---|---|---|
| Additive | Calcium stearate | ppm | 0 | 600 |
| Microporous membrane | Processability in general swelling (the number of defects) | - | Film not formable | △ |
| | | number/$m^2$ | | 55 |
| | Processability in low-temperature swelling (the number of defects) | - | Film not formable | × |
| | | number/$m^2$ | | >100 |
| | Processability in general swelling (uneven film thickness) | - | Film not formable | × |
| | | μm | | 5.0 |
| | Processability in low-temperature swelling (uneven film thickness) | - | Film not formable | × |
| | | μm | | 7.1 |
| | Puncture strength | - | Film not formable | ◎ |
| | | gf/(g/$m^2$) | | 84 |
| | Thermal shrinkage at 120°C at porosity of 50% | - | Film not formable | ◎ |
| | | % | | 18 |

[Table 4]

| | | Unit | Comparative Example 2 | Comparative Example 4 |
|---|---|---|---|---|
| Polymerization conditions | Polymerization temperature | °C | 40 | 50 |
| | Polymerization pressure | MPa | 0.4 | 0.4 |
| | Hydrogen concentration | mol% | 0 | 0 |
| | Hydrogen pressure | MPa | 0 | 0 |
| | Comonomer (gas phase concentration) | mol% | 0 | 0 |
| | Catalyst type | - | Catalyst 2-2 | Catalyst 2-2 |
| | Promoter type | - | Promoter 2 | Promoter 2 |
| | Polymerization residence time | h | 1.0 | 1.0 |
| | Amount of catalyst | mg | 20.0 | 20.0 |
| Drying conditions | Drying temperature | °C | 70 | 65 |
| | Drying time | h | 2.5 | 1.5 |
| Polyethylene powder | Yield | g | 93.4 | 79.6 |
| | Catalytic activity | g-PE/g-catalyst | 4670 | 3980 |
| | $D_{10}$ | μm | 55 | 65 |
| | $D_{50}$ | μm | 94 | 109 |
| | $D_{90}$ | μm | 143 | 163 |
| | $D_{90}/D_{10}$ | - | 2.6 | 2.5 |
| | Melting point (Tm2) | °C | 137 | 137 |
| | Intrinsic viscosity IV | dL/g | 33.5 | 30.6 |
| | Average value $T_S$ of swelling onset temperatures of powders of $D_{10}$, $D_{50}$, and $D_{90}$ | °C | 134 | 133 |
| | Standard deviation s of swelling onset temperatures of powders of $D_{10}$, $D_{50}$, and $D_{90}$ | °C | 7.2 | 5.8 |
| | Comonomer content measured by $^{13}C$-NMR | mol% | 0 | 0 |
| | Ti content | ppm | 4.1 | 4.2 |
| | Al content | ppm | 4.2 | 4.1 |
| | Si content | ppm | < 1 | < 1 |

(continued)

| | | Unit | Comparative Example 2 | Comparative Example 4 |
|---|---|---|---|---|
| Additive | Calcium stearate | ppm | 0 | 0 |
| High-strength fiber | Processability in general swelling (the number of thread lumps) | - | × | × |
| | | number/m | 15 | 12 |
| | Processability in low-temperature swelling (the number of thread lumps) | - | × | × |
| | | number/m | 20 | 14 |
| | Processability in general swelling (uneven thread diameter) | - | × | × |
| | | μm | 12 | 12 |
| | Processability in low-temperature swelling (uneven thread diameter) | - | × | × |
| | | μm | 15 | 14 |
| | Processability in general swelling (Tensile breaking strength) | - | × | × |
| | | cN/dtex | 15 | 18 |
| | Processability in low-temperature swelling (Tensile breaking strength) | - | × | × |
| | | cN/dtex | 12 | 16 |

The present application is based on Japanese Patent Application No. 2021-159241 filed on September 29, 2021, the contents of which are incorporated herein by reference.

Industrial Applicability

The ultrahigh-molecular-weight polyethylene powder of the present invention is excellent in shaping processability when swollen beforehand at a low temperature, and can therefore provide a high-quality shaped article, for example, a separator for secondary battery and a fiber, and thus has industrial applicability.

## Claims

**1.** An ultrahigh-molecular-weight polyethylene powder

having intrinsic viscosity IV of 1.0 dL/g or more and 33.0 dL/g or less, wherein average value $T_S$ of swelling onset temperatures determined by the following methods 1 and 2 is 90°C or higher and 130°C or lower:

[Method 1; method for measuring $D_{10}$, $D_{50}$, and $D_{90}$]
Particle sizes of the target ultrahigh-molecular-weight polyethylene powder are measured using a laser particle size distribution analyzer with methanol as a dispersion medium, and a cumulative particle size distribution from smaller particle sizes is prepared on the basis of the measurement. Particle sizes that attain cumulative percentages of 10%, 50%, and 90% are defined as $D_{10}$, $D_{50}$, and $D_{90}$, respectively.
[Method 2; method for measuring swelling onset temperatures $T_{10}$, $T_{50}$, and $T_{90}$ and method for calculating average value $T_S$ thereof]

Swelling onset temperature $T_{10}$ of a powder having a particle size of $D_{10}$ is determined. First, any one particle of an ultrahigh-molecular-weight polyethylene powder having a major axis size and a minor axis size (as for a plane figure of a particle observed under an optical microscope, a distance between parallel lines having the shortest interval is defined as the minor axis size of the particle, and a distance between parallel lines having the longest interval in a direction perpendicular thereto is defined as the major axis size of the particle) within a range of $D_{10} \pm 10\%$ is collected while confirming with an optical microscope. The collected one particle of the ultrahigh-molecular-weight polyethylene powder (hereinafter, also referred to as a "measurement particle") is loaded onto a glass slide, and 0.05 mL of liquid paraffin is dropped to the measurement particle using a 1 mL syringe. Then, a glass cover is placed thereon so as to sandwich the measurement particle. Then, the glass slide is loaded onto a heat stage and heated from room temperature to 150°C under heating conditions given below. The appearance of the measurement particle during heating is photographed every 6 seconds under an optical microscope equipped with a camera. An equivalent circle diameter of the measurement particle is calculated from each of the obtained observation images. The lowest temperature at which the equivalent circle diameter of the measurement particle is increased by 1% or more with respect to the equivalent circle diameter of the measurement particle at 80°C in a temperature range of 80°C or higher and 150°C or lower is defined as the swelling onset temperature of the measurement particle. Measurement is performed for n = 10, and an average value thereof is defined as the swelling onset temperature $T_{10}$.
Next, swelling onset temperature $T_{50}$ of an ultrahigh-molecular-weight polyethylene powder having a particle size of $D_{50}$, and swelling onset temperature $T_{90}$ of an ultrahigh-molecular-weight polyethylene powder having a particle size of $D_{90}$ are also determined in the same manner as in the swelling onset temperature $T_{10}$ using respectively an ultrahigh-molecular-weight polyethylene powder having a major axis size and a minor axis size within a range of $D_{50} \pm 10\%$, and an ultrahigh-molecular-weight polyethylene powder having a major axis size and a minor axis size within a range of $D_{90} \pm 10\%$.
Finally, average value $T_S$ of the swelling onset temperatures $T_{10}$, $T_{50}$, and $T_{90}$ is determined as follows:

$$T_S = \frac{T_{10} + T_{50} + T_{90}}{3}$$

(Heating conditions)

Heating rate from room temperature to 35°C: 5°C/min
Heating rate in a range from 35°C to 80°C: 8°C/min
Heating rate in a range from 80°C to 150°C: 5°C/min.

**2.** The ultrahigh-molecular-weight polyethylene powder according to claim 1, wherein standard deviation s of the swelling onset temperatures of the powders having particle sizes of $D_{10}$, $D_{50}$, and $D_{90}$ is 5°C or less.

**3.** The ultrahigh-molecular-weight polyethylene powder according to claim 1 or 2, wherein the standard deviation s of the swelling onset temperatures of the powders having particle sizes of $D_{10}$, $D_{50}$, and $D_{90}$ is 2.4°C or less.

**4.** The ultrahigh-molecular-weight polyethylene powder according to claim 1 or 2, wherein a comonomer content measured by $^{13}C$-NMR is 1.0 mol% or less.

**5.** The ultrahigh-molecular-weight polyethylene powder according to claim 1 or 2, having a titanium (Ti) content of 5.0 ppm or less, an aluminum (Al) content of 5.0 ppm or less, and a silicon (Si) content of 100 ppm or less.

**6.** The ultrahigh-molecular-weight polyethylene powder according to claim 1 or 2, wherein $D_{90}/D_{10}$ is 1.2 or more and 4.0 or less.

**7.** The ultrahigh-molecular-weight polyethylene powder according to claim 1 or 2, wherein $D_{10}$ is 30 μm or larger, and $D_{90}$ is 425 μm or smaller.

**8.** A shaped article obtained by shaping the ultrahigh-molecular-weight polyethylene powder according to claim 1.

**9.** The shaped article according to claim 8, wherein the shaped article is a separator for secondary battery.

**10.** The shaped article according to claim 8, wherein the shaped article is a fiber.

**11.** A method for producing the ultrahigh-molecular-weight polyethylene powder according to claim 1, comprising the steps of:

in producing an ethylene polymer, mixing 0.01 to 0.05 mol% of a comonomer in terms of a gas phase concentration into ethylene, and performing polymerization; and
drying a polymer powder at 100°C or higher.

**12.** A method for producing the ultrahigh-molecular-weight polyethylene powder according to claim 1, comprising a polymerization step of performing polymerization in a state of a polymerization solvent supplemented with 30 to 50% by mass of a plasticizer.

**13.** The method for producing an ultrahigh-molecular-weight polyethylene powder according to claim 12, further comprising:

a removal step of removing the plasticizer from the powder after completion of the polymerization step; and
a drying step of setting catalytic activity during polymerization to 5000 (g-PE/g-catalyst) or less, and drying the polymer powder at 70°C or lower.

**14.** The method for producing an ultrahigh-molecular-weight polyethylene powder according to claim 12 or 13, wherein the plasticizer is liquid paraffin.

**INTERNATIONAL SEARCH REPORT**

International application No.
**PCT/JP2022/036272**

**A. CLASSIFICATION OF SUBJECT MATTER**

***C08F 10/02***(2006.01)i; ***D01F 6/04***(2006.01)i
FI: C08F10/02; D01F6/04 B

According to International Patent Classification (IPC) or to both national classification and IPC

**B. FIELDS SEARCHED**

Minimum documentation searched (classification system followed by classification symbols)

C08F; D01F6

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-116375 A (TORAY INDUSTRIES) 10 August 2021 (2021-08-10) claims, paragraphs [0009], [0023], [0027], [0028], [0050], examples | 1-4, 6-9 |
| Y | | 1-9 |
| A | | 10-14 |
| X | WO 2019/187727 A1 (ASAHI KASEI KABUSHIKI KAISHA) 03 October 2019 (2019-10-03) claims, paragraphs [0011], [0022], [0025], example 4, comparative example 6 | 1-11 |
| Y | | 1-11 |
| A | | 12-14 |
| X | JP 2019-48967 A (ASAHI KASEI KABUSHIKI KAISHA) 28 March 2019 (2019-03-28) claims, paragraphs [0002], [0013], [0019], [0021], [0045], examples 1, 11 | 1-11 |
| Y | | 1-11 |
| A | | 12-14 |
| Y | CN 107556411 A (SHANGHAI LIANLE INDUSTRY SCIENCE AND TECHNOLOGY CO., LTD.) 09 January 2018 (2018-01-09) paragraph [0036] | 1-11 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 November 2022** | **29 November 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No. **PCT/JP2022/036272**

**C. DOCUMENTS CONSIDERED TO BE RELEVANT**

| Category* | Citation of document, with indication, where appropriate, of the relevant passages | Relevant to claim No. |
|---|---|---|
| Y | WO 2020/067161 A1 (ASAHI KASEI KABUSHIKI KAISHA) 02 April 2020 (2020-04-02) paragraph [0065] | 1-11 |

Form PCT/ISA/210 (second sheet) (January 2015)

**INTERNATIONAL SEARCH REPORT**
**Information on patent family members**

International application No.
**PCT/JP2022/036272**

| Patent document cited in search report | Publication date (day/month/year) | Patent family member(s) | Publication date (day/month/year) |
|---|---|---|---|
| JP 2021-116375 A | 10 August 2021 | (Family: none) | |
| WO 2019/187727 A1 | 03 October 2019 | US 2021/0017363 A1<br>claims, paragraphs [0035]-[0037], [0056]-[0058], [0062], example 4, comparative example 6<br>EP 3778662 A1<br>KR 10-2020-0105947 A<br>CN 111868113 A | |
| JP 2019-48967 A | 28 March 2019 | CN 109467630 A<br>KR 10-2019-0027710 A | |
| CN 107556411 A | 09 January 2018 | (Family: none) | |
| WO 2020/067161 A1 | 02 April 2020 | US 2021/0074983 A1<br>paragraph [0117]<br>EP 3859822 A1<br>KR 10-2020-0108476 A<br>CN 111727517 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2017088773 A
- JP 2017145306 A
- JP 2019019265 A
- JP 2019070117 A
- JP 2019123777 A
- JP 4868853 B
- DE 3127133
- JP 2021159241 A

### Non-patent literature cited in the description

- Structural determinant of lamellar crystal thickness distribution of polyethylene. **SATORU HOSODA ; YOSHINOBU NOZUE.** Japanese Journal of Polymer Science and Technology. The Society of Polymer Science, November 2014, vol. 71, 484